# EUROPÄISCHE PATENTSCHRIFT

(11) **EP 3 808 037 B1**
(45) Veröffentlichungstag und Bekanntmachung des Hinweises auf die Patenterteilung: **13.10.2021**
(21) Anmeldenummer: 20712550.1
(22) Anmeldetag: 18.03.2020
(51) Int. Cl.: H04L 12/40

(54) **DATENÜBERTRAGUNGSVERFAHREN, DATENSTRUKTUR, AUTOMATISIERUNGSNETZWERK UND ENTSPERRER**
DATA TRANSMISSION METHOD, DATA STRUCTURE, AUTOMATION NETWORK AND UNBLOCKER
PROCÉDÉ DE TRANSMISSION DE DONNÉES, STRUCTURE DE DONNÉES, RÉSEAU D'AUTOMATISATION ET DISPOSITIF DE DÉVERROUILLAGE

(30) Priorität: 28.05.2019 DE 102019114305
(43) Veröffentlichungstag der Anmeldung: 21.04.2021
(73) Patentinhaber: Beckhoff Automation GmbH, 33415 Verl (DE)
(72) Erfinder: JANSSEN, Dirk, 33415 Verl (DE); ESSLER, Florian, 90427 Nürnberg (DE); BECKMANN, Guido, 33415 Verl (DE); BECKHOFF, Hans, 33415 Verl (DE); BÜTTNER, Holger, 12205 Berlin (DE); ROSTAN, Martin, 90482 Nürnberg (DE); RETTIG, Thomas, 33378 Rheda-Wiedenbrück (DE)
(74) Vertreter: Patentanwaltskanzlei WILHELM & BECK
(86) Internationale Anmeldenummer: PCT/EP2020/057460
(87) Internationale Veröffentlichungsnummer: WO 2020/239287

(56) Entgegenhaltungen:
- EP-A1- 3 157 201
- DE-A1-102010 020 446
- DE-A1-102014 112 082

## Beschreibung

Die Erfindung betrifft ein Verfahren zur Datenübertragung in einem Automatisierungsnetzwerk und ein zugehöriges Automatisierungsnetzwerk. Die Erfindung betrifft weiterhin eine Datenstruktur zur Verwendung in dem Verfahren zur Datenübertragung und einen Entsperrer, der ausgebildet ist das Verfahren zur Datenübertragung auszuführen und die Datenstruktur zu verwenden.

Diese Patentanmeldung beansprucht die Priorität der deutschen Patentanmeldung DE 10 2019 114 305.5, eingereicht am 28.05.2019 mit dem Titel DATENÜBERTRAGUNGSVER-FAHREN, DATENSTRUKTUR, AUTOMATISIERUNGSNETZWERK UND ENTSPERRER. Automatisierungsnetzwerke werden häufig als sogenannte "Feldbussysteme" betrieben. Feldbussysteme sind industrielle Bussysteme, die eine echtzeitfähige Steuerung der Maschinen oder Anlagen des Automatisierungsnetzwerks ermöglichen. In der Regel werden die Maschinen oder Anlagen des Automatisierungsnetzwerks mithilfe von speicherprogrammierbaren Steuerungen (SPS) gesteuert. Zur Kommunikation der Feldgeräte, also beispielsweise Sensoren und Aktoren der Maschinen oder Anlagen des Automatisierungsnetzwerks mit der SPS, nutzt die SPS das Feldbussystem. Senden mehrere Kommunikationsteilnehmer Telegramme über dieselbe Datenleitung, die als leitungsgebundenes oder drahtloses Bussystem ausgebildet sein kann, so muss festgelegt sein, welcher Kommunikationsteilnehmer was (Messwerte bereitstellen, Befehle ausführen und beispielsweise Teilaufgaben abarbeiten, etc.) wann "sagen darf". Zu diesem Zweck gibt es festgelegte Hierarchien und normierte Datenübertragungsprotokolle.

Meist arbeiten die Feldbussysteme im sogenannten "Master-Slave-Betrieb". Das heißt der Masterteilnehmer übernimmt die Steuerung der Prozesse, während die Slaveteilnehmer die Abarbeitung von Teilaufgaben im Steuerungsbetrieb des Automatisierungsnetzwerks übernehmen. Der Austausch von Daten erfolgt dabei im Automatisierungsnetzwerk mithilfe von Telegrammen, die vom Masterteilnehmer an die Slaveteilnehmer ausgegeben werden. Die Slaveteilnehmer lesen die an sie adressierten Ausgangsdaten aus dem Telegramm und legen ihre Eingangsdaten in das Telegramm und senden das Telegramm an den Masterteilnehmer zurück.

In Automatisierungsnetzwerken, in denen der Datenverkehr mittels Telegrammen mit zugrundeliegendem EtherCAT Datenübertragungsprotokoll erfolgt, nachfolgend als EtherCAT Netzwerke bezeichnet, werden die Telegramme durch alle Slaveteilnehmer geroutet und im Falle einer an einer Datenleitung angeschlossenen Kette an Slaveteilnehmern von dem letzten Slaveteilnehmer an den Masterteilnehmer zurückgesendet. Dabei bezeichnet Routing das Festlegen von Übertragungswegen für die Übermittlung von Telegrammen im Automatisierungsnetzwerk. Nachteilig an einem solchen EtherCAT Netzwerk ist der Umstand, dass die Telegramme stets von allen Slaveteilnehmern durchlaufen und verarbeitet werden, das heißt jeder Slaveteilnehmer liest die an ihn adressierten Ausgangsdaten des Telegramms im Durchlauf ("on the fly") und legt seine Eingangsdaten in das Telegramm, bevor der Slaveteilnehmer das Telegramm weitergeleitet. Hierbei entspricht das Senden eines Telegramms von einem Slaveteilnehmer in einem EtherCAT Netzwerk dem Eintragen von Informationen in das vom Masternetzwerkteilnehmer gesendete Telegramm und das Weiterleiten des Telegramms an einen in Telegrammlaufrichtung nachfolgenden Slaveteilnehmer, da ein Slaveteilnehmer in einem EtherCAT Netzwerk selbst keine Quittierungs- oder Antworttelegramme auf Anfrage des Masterteilnehmers sendet. In einem herkömmlichen EtherCAT Netzwerk gibt es demnach keine Möglichkeit Telegramme für bestimmte Segmente mit Slaveteilnehmern zu aktivieren, also die Telegramme für die bestimmten Segmente für die Verarbeitung durch die Slaveteilnehmer freizugeben, während die Telegramme für die nicht adressierten Slaveteilnehmer in einem Segment für die Verarbeitung gesperrt sind.

Druckschrift DE 10 2014 112 082 A1 offenbart einen Verteilerknoten, eine Automatisierungsnetzwerk und ein Verfahren zum Übertragen von echtzeitrelevanten und nicht-echtzeitrelevanten Datenpaketen. Der Verteilerknoten weist Ein-/Ausgabe-Schnittstellen und eine mit den Ein-/Ausgabe-Schnittstellen verbundene Vermittlungseinrichtung auf. Die Vermittlungseinrichtung erfasst beim Empfang eines nicht-echtzeitrelevanten Datenpakets die Länge des Datenpakets, um darauf basierend die Sendezeitdauer zu ermitteln. Ist die Sendezeitdauer geringer als eine Sendepausen-Zeitdauer einer Ein-/Ausgabe-Schnittstelle bis zum Senden eines nächsten echtzeitrelevanten Datenpakets, so versendet die Vermittlungseinrichtung das nicht-echtzeitrelevante Datenpaket über die entsprechende Ein-/Ausgabe-Schnittstelle.

Die Druckschrift DE 10 2010 020 446 A1 beschreibt ein Automatisierungsgerät und ein Verfahren zur beschleunigten Verarbeitung von selektierten Prozessdaten. Das Automatisierungsgerät weist zumindest eine Feldbusschnittstelle auf und ist zum Übertragen von Datenpaketen mit Prozessdaten über die Feldbusschnittstelle und einem Feldbus ausgelegt. Das Automatisierungsgerät weist eine Beschleunigungseinheit auf zur Selektion beschleunigt umzusetzender Prozessdaten und zur gesonderten Umsetzung der selektierten Prozessdaten.

In der Druckschrift EP 3 157 201 A1 ist ein zeitgesteuertes Cut-Through-Verfahren zum Datentransport in verteilten Echtzeitsystemen beschrieben. Das verteilte Echtzeitsystem weist eine Vielzahl an Knotenrechnern und Verteilereinheiten auf zwischen denen Echtzeitdaten mittels zeitgesteuerter Echtzeitnachrichten transportiert werden.

Es ist daher Aufgabe der vorliegenden Erfindung, ein Verfahren zur Datenübertragung mithilfe von Telegrammen anzugeben, das ein gezieltes Ansprechen eines Segments mit Slaveteilnehmern ermöglicht. Es ist weiterhin Aufgabe der Erfindung, die Vertraulichkeit der Datenübertragung in einem Automatisierungsnetzwerk mithilfe einer verbesserten Datenstruktur zu erhöhen und ein verbessertes Automatisierungsnetzwerk anzugeben.

Diese Aufgabe wird durch die Merkmale der unabhängigen Ansprüche gelöst. Weitere vorteilhafte Ausführungsformen der Erfindung sind in den abhängigen Ansprüchen angegeben.

Erfindungsgemäß werden ein Verfahren zur Datenübertragung in einem Automatisierungsnetzwerk mithilfe von Telegrammen und ein zugehöriges Automatisierungsnetzwerk vorgeschlagen. Das Automatisierungsnetzwerk umfasst einen Masterteilnehmer, Slaveteilnehmer und wenigstens einen Entsperrer, die über ein Datenleitungsnetz miteinander verbunden sind. Weiterhin sind die Slaveteilnehmer in Segmente unterteilt, wobei jedes Segment zumindest einen Slaveteilnehmer umfasst. Der Masterteilnehmer versendet für eine Verarbeitung durch die Slaveteilnehmer gesperrte Telegramme, die jeweils eine Telegramm-Kennung aufweisen, um ein gesperrtes Telegramm einem Segment zuzuordnen. Dem wenigstens einen Entsperrer ist wenigstens ein Segment zugeordnet. Empfängt der wenigstens eine Entsperrer ein gesperrtes Telegramm, so prüft der wenigstens eine Entsperrer anhand der Telegramm-Kennung in dem gesperrten Telegramm, ob das gesperrte Telegramm für das dem wenigstens einen Entsperrer zugeordnete Segment bestimmt ist, um das gesperrte Telegramm als entsperrtes Telegramm für die Verarbeitung durch die Slaveteilnehmer freizugeben, sofern das gesperrte Telegramm für das dem wenigstens einen Entsperrer zugeordnete Segment bestimmt ist.

Das vorgeschlagene Verfahren zur Datenübertragung bietet die Möglichkeit die Telegramme gezielt für die Slaveteilnehmer in einem Segment, also beispielsweise eine Anordnung von Slaveteilnehmern in einer linearen Kette, für die Verarbeitung freizuschalten. Durch die gezielte Freigabe der Telegramme für die Verarbeitung durch die Slaveteilnehmer in einem Segment können schnellere Laufzeiten der Telegramme im Automatisierungsnetzwerk bereitgestellt werden. Dabei umfasst die Laufzeit einen Sendevorgang des Telegramms über eine Datenleitung, eine Durchlaufverzögerungszeit, die sich aus einer Hardware-Durchlaufzeit, also der Durchlaufzeit durch den einzelnen Slaveteilnehmer ergibt, und einen Empfangsvorgang über die Datenleitung. Insbesondere kann durch das Verfahren die Durchlaufverzögerungszeit durch die einzelnen Slaveteilnehmer in einem Segment, die nicht mit dem Telegramm angesprochen werden sollen, reduziert werden, da von den Slaveteilnehmern lediglich im Telegramm geprüft werden muss, ob eine Adressierung des Slaveteilnehmers in dem Segment vorliegt und bei negativem Prüfungsresultat auch kein Auslesen von Ausgangsdaten aus dem Telegramm und Einfügen von Eingangsdaten in das Telegramm, von den Slaveteilnehmern eines Segments, die nicht im Telegramm adressiert sind, erfolgt.

Mithilfe des Verfahrens können Telegramme maskiert werden, das heißt die eigentlichen Nutzdaten der Telegramme für Slaveteilnehmer verborgen werden, die mit den Telegrammen nicht angesprochen werden sollen. Die Sperrung der Verarbeitung der Telegramme für Slaveteilnehmer kann demnach die Informationssicherheit im Automatisierungsnetzwerk verbessern und eine höhere Vertraulichkeit bei der Datenübertragung bereitstellen. Dabei ist das vorgeschlagene Verfahren nicht auf das EtherCAT Datenübertragungsprotokoll für die Telegramme beschränkt, sondern kann auch für andere Datenübertragungsprotokolle und Automatisierungsnetzwerke umgesetzt werden, in denen mit den Telegrammen bislang nur alle Slaveteilnehmer angesprochen werden können.

In einer weiteren Ausführungsform weisen die Telegramme jeweils ein Datenfeld mit einem Datenelement auf. Sind die Telegramme gesperrt, so umfasst das Datenelement einen ersten Wert. Sind die Telegramme dagegen entsperrt, so weist das Datenelement einen zweiten Wert auf. Der wenigstens eine Entsperrer setzt beim Entsperren eines gesperrten Telegramms den ersten Wert des Datenelements auf den zweiten Wert des Datenelements, um den Slaveteilnehmern eine Freigabe der Verarbeitung des Telegramms anzuzeigen.

Soll beispielsweise von einem beliebigen Punkt in einer Fabrik auf eine Maschine oder Anlage des Automatisierungsnetzwerks zugegriffen werden oder der Zugriff auf die Maschine oder Anlage von zu Hause aus erfolgen, so muss ein Sicherheitsmechanismus geschaffen werden, um der Gefahr vor unerlaubten Zugriffen auf die Maschine oder Anlage und gegebenenfalls einer damit verbundenen Manipulation des Automatisierungsnetzwerks entgegenzutreten. Beispielsweise kann in diesem Zusammenhang zu jedem Slaveteilnehmer im Automatisierungsnetzwerk eine verschlüsselte Verbindung für die Datenübertragung aufgebaut werden, wobei jedoch jeder Slaveteilnehmer die Verschlüsselung unterstützen muss. Wird lediglich ein Datenübertragungsprotokoll im gesamten Automatisierungsnetzwerk genutzt, sowohl für eine externe Verbindung für das Internet als auch lokal für die Steuerung der Maschinen oder Anlagen des Automatisierungsnetzwerks, so erfordert dies auch eine lokale Verschlüsselung der Maschinen- oder Anlagensteuerung und damit der Telegramme für die Datenübertragung, die beispielsweise als EtherCAT Telegramme ausgebildet sein können. Mit dem vorgeschlagenen Verfahren kann im Vergleich zu einer Verschlüsselung der Telegramme vorteilhaft eine schnellere Telegrammübertragung bereitgestellt werden, da die Telegrammübertragung eines verschlüsselten Telegramms und die damit verbundene Entschlüsselung des Telegramms zeitintensiver ausgebildet sind, als das Setzen des ersten Werts des Datenelements auf den zweiten Werts des Datenelements von dem wenigstens einen Entsperrer, um das Telegramm für die Verarbeitung durch die Slaveteilnehmer zu entsperren.

Auch kann das Verfahren vorteilhaft eingesetzt werden, wenn verschiedene Datenübertragungsprotokolle im Automatisierungsnetzwerk umgesetzt werden. Beispielsweise kann das EtherCAT Datenübertragungsprotokoll für die Steuerung der Maschinen oder Anlagen des Automatisierungsnetzwerks genutzt werden, und hierbei gezielt Segmente mit den EtherCAT Telegrammen für Steuerungsaufgaben adressiert werden, und ein davon abweichendes Datenübertragungsprotokoll für den Zugriff auf die Maschinen oder Anlagen des Automatisierungsnetzwerks, wobei der Zugriff beispielsweise lediglich im Auslesen von Diagnosedaten, wie beispielsweise Betriebstemperaturen der Maschinen oder Anlagen des Automatisierungsnetzwerks, etc., liegen kann.

Gemäß einer weiteren Ausführungsform versendet der Masterteilnehmer vor dem Versenden der Telegramme ein Konfigurationstelegramm an den wenigstens einen Entsperrer, das dem wenigstens einen Entsperrer die Telegramm-Kennung des Segments anzeigt, das dem wenigstens einen Entsperrer zugeordnet ist. Das Konfigurationstelegramm kann einmalig vor dem Versenden der Telegramme, also dem Telegrammverkehr für den Steuerungsbetrieb des Automatisierungsnetzwerks, versendet werden oder ebenfalls denkbar, dynamisch, in einem Zeitfenster versendet werden, in dem sich das Automatisierungsnetzwerk gerade nicht im Steuerungsbetrieb befindet, um möglich auftretende Probleme beim Versenden des Konfigurationstelegramms im Steuerungsbetrieb zu vermeiden. Mithilfe des wenigstens einen Entsperrers im Automatisierungsnetzwerk kann das Verfahren zur Datenübertragung einfach im Automatisierungsnetzwerk implementiert werden. Aufgrund der raschen Konfiguration des wenigstens einen Entsperrers mit einem Konfigurationstelegramm ist der Aufwand für die Umsetzung des Verfahrens gering. Beispielsweise kann neben dem Anzeigen der Telegramm-Kennung des Segments, das dem wenigstens einen Entsperrer zugeordnet ist, mit dem Konfigurationstelegramm auch eingestellt werden, dass der wenigstens eine Entsperrer für das Segment mit der Telegramm-Kennung, das dem wenigstens einen Entsperrer zugeordnet ist, den ersten Wert des Datenelements auf den zweiten Wert des Datenelements setzt, wenn der wenigstens eine Entsperrer ein gesperrtes Telegramm mit der Telegramm-Kennung und dem ersten Wert des Datenelements erhält, und der wenigstens eine Entsperrer das entsperrte Telegramm dann an das ihm zugeordnete Segment ausgibt. Mithilfe des Konfigurationstelegramms kann eine Zuordnungsmöglichkeit der Telegramm-Kennung zu einem Segment geschaffen werden und durch den Einsatz des wenigstens einen Entsperrers eine schnelle und einfache Freigabe der Telegramme für die Verarbeitung durch die Slaveteilnehmer in einem Segment bereitgestellt werden.

In einer weiteren Ausführungsform umfasst das Datenleitungsnetz Datenverbindungen zwischen dem Masterteilnehmer, den Slaveteilnehmern und mehreren Entsperrern. Empfängt ein Entsperrer ein entsperrtes Telegramm von einem vorausgehenden Entsperrer über eine Datenverbindung, das nicht für das dem Entsperrer zugeordnete Segment bestimmt ist, so sperrt der Entsperrer das Telegramm. Das vorgeschlagene Verfahren ist insbesondere nicht auf das Entsperren eines gesperrten Telegramms durch den Entsperrer beschränkt, sondern der Entsperrer kann auch flexibel für das Sperren eines Telegramms eingestellt werden. Dies ist insbesondere denkbar, wenn der Entsperrer ein entsperrtes Telegramm von einem weiteren, vorangehenden Entsperrer, der in Telegrammrücklaufrichtung zum Masterteilnehmer beispielsweise vor dem Entsperrer angeordnet sein kann, empfängt, und das Telegramm nicht für das dem Entsperrer zugeordnete Segment bestimmt ist und zusätzlich entlang der Telegrammrücklaufrichtung eine Verarbeitung des entsperrten Telegramms durch die Slaveteilnehmer nicht ausgeschlossen ist. Alternativ kann der Entsperrer auch ein Telegramm, dass der Entsperrer in Telegrammhinlaufrichtigung, vom Masterteilnehmer ausgehend, von einem vorausgehenden Entsperrer empfangen hat und das nicht für das dem Entsperrer zugeordnete Segment bestimmt ist, sperren.

Gemäß einer weiteren Ausführungsform umfasst das Datenleitungsnetz Datenverbindungen zwischen dem Masterteilnehmer, den Slaveteilnehmern und mehreren Entsperrern, wobei die Datenverbindungen jeweils eine Hinleitung und eine Rückleitung aufweisen. Die Slaveteilnehmer verarbeiten die Telegramme jeweils auf der Hinleitung der Datenverbindung. Empfängt ein Entsperrer über eine Hinleitung einer Datenverbindung ein entsperrtes Telegramm von einem vorausgehenden Entsperrer, so versendet der Entsperrer das entsperrte Telegramm über eine Rückleitung der Datenverbindung an den Masterteilnehmer. Insbesondere ein Automatisierungsnetzwerk, das als EtherCAT Netzwerk ausgebildet ist, kann Datenverbindungen, die als Datenleitungen ausgebildet sein können, umfassen, die jeweils eine Hinleitung (TX-Leitung, TX: Transmitter) zum Versenden der Telegramme von dem Masterteilnehmer ausgehend, und eine Rückleitung (RX-Leitung, RX: Receiver) zum Empfang der Telegramme durch den Masterteilnehmer, aufweisen. Dabei kann vorgesehen sein, dass eine Verarbeitung der Telegramme durch die Slaveteilnehmer nur auf der Hinleitung der Datenverbindung bzw. der Datenleitung erfolgt, und die Telegramme von den Slaveteilnehmern auf der Rückleitung ohne Verarbeitung an den Masterteilnehmer versendet werden.

Der Entsperrer kann in dem EtherCAT Netzwerk derart konfiguriert sein, dass der Entsperrer beim Empfang eines entsperrten Telegramms von einem an der Datenverbindung bzw. Datenleitung vorangehenden weiteren Entsperrer erkennt, dass die Verarbeitung des Telegramms durch die Slaveteilnehmer bereits erfolgt ist und beispielsweise aufgrund der Telegramm-Kennung keine Verarbeitung des Telegramms auf der Hinleitung mehr vorgesehen ist, sodass der Entsperrer das entsperrte Telegramm direkt über die Rückleitung an den Masterteilnehmer senden kann.

In einer weiteren Ausführungsform ist der wenigstens eine Entsperrer als Netzwerkverteiler ausgebildet und weist mehrere Ein-/Ausgangs-Ports auf, an denen Segmente mit Slaveteilnehmern angeschlossen sind. Der als Netzwerkverteiler ausgebildete wenigstens eine Entsperrer verwendet die Telegramm-Kennung für ein Routing des Telegramms über die mehreren Ein-/Ausgangs-Ports des als Netzwerkverteilers ausgebildeten wenigstens einen Entsperrers.

Ist der Entsperrer als Netzwerkverteiler ausgebildet, so können die Funktionen eines Netzwerkverteilers vorteilhaft ausgenutzt werden, beispielsweise die verschiedenen Betriebsweisen des Netzwerkverteilers, wie Store-and-Forward, Cut-through, etc.. Auch kann der als Netzwerkverteiler ausgebildete Entsperrer ausgelegt sein, die Telegramme zu fragmentieren, um eine Kollision der von den Slaveteilnehmern zu dem Masterteilnehmer zurückgesandten Telegramme zu vermeiden. Die Telegramm-Kennung kann im Falle der Ausgestaltung des Entsperrers als Netzwerkverteiler für ein Routing der Telegramme über die einzelnen Ein-/Ausgangs-Ports des Netzwerkverteilers vorteilhaft genutzt werden, um eine rasche Zuordnung der einzelnen Ein-/Ausgangs-Ports des Netzwerkverteilers zu den Telegramm-Kennungen für die Segmente zu gewähren. Die Ausgestaltung des Entsperrers als Netzwerkverteiler ist insbesondere denkbar, wenn die dem Automatisierungsnetzwerk zugrundeliegende Netzwerktopologie als eine Baumstruktur oder eine vergleichbare verzweigte Struktur ausgebildet ist und eine Verzweigung des Entsperrers mit mehreren Ein-/Ausgangs-Ports begünstigt. Im Unterschied dazu kann der Entsperrer in einer Linien- oder Ringtopologie zum Beispiel zwei Ein-/Ausgangs-Ports umfassen, wobei ein Ein-/Ausgangs-Port als Eingangs-Port und ein Ein-/Ausgangs-Port als Ausgangs-Port ausgelegt sein kann. Mangels Verzweigung kann es in einem derart ausgestalteten Automatisierungsnetzwerk zum Beispiel nicht erforderlich sein, dass der Entsperrer als Netzwerkverteiler ausgebildet ist.

Gemäß einer weiteren Ausführungsform ist der wenigstens eine Entsperrer zusätzlich als Slaveteilnehmer ausgelegt, um das Telegramm auch zu verarbeiten. Dies bietet die Möglichkeit der Kostenersparnis, da keine zusätzliche Netzwerkkomponente eingesetzt werden muss, sondern der Entsperrer gezielt Telegramme für die Verarbeitung durch die Slaveteilnehmer in einem Segment freigeben kann und dabei selbst an der Telegrammverarbeitung als Slaveteilnehmer beteiligt sein kann.

Erfindungsgemäß wird des Weiteren eine Datenstruktur zur Verwendung in einem Verfahren vorgeschlagen. Die Datenstruktur ist als Telegramm ausgebildet, und das Telegramm weist einen Kopfabschnitt, einen Datenabschnitt und einen Endabschnitt auf. Der Kopfabschnitt umfasst die Telegramm-Kennung. Der Datenabschnitt weist das Datenfeld mit dem Datenelement auf. Das Datenelement umfasst den ersten Wert, wenn das Telegramm gesperrt ist. Das Datenelement umfasst den zweiten Wert, sofern das Telegramm entsperrt ist. Der Endabschnitt umfasst ein Prüfsummenfeld für eine Integritätsprüfung von versendeten Daten. Dadurch, dass die Telegramm-Kennung für die Zuordnung der Telegramme zu den Segmenten sowie das Datenfeld mit dem Datenelement, das die Sperrung oder Freigabe der Verarbeitung des Telegramms für die Slaveteilnehmer anzeigt jeweils im Kopfabschnitt des Telegramms enthalten ist, können diese Informationen durch die Slaveteilnehmer zügig im Durchlauf verarbeitet werden und eine rasche Weiterleitung der Telegramme an einen nachfolgenden Slaveteilnehmer erfolgen, wenn festgestellt wird, dass das Datenelement den ersten Wert, der die Sperrung des Telegramms für die Verarbeitung anzeigt, umfasst. Der Telegrammverkehr im Steuerungsbetrieb wird durch die Sperrung oder Entsperrung der Telegramme von den Entsperrern mittels der vorgeschlagenen Ausbildung der Telegramme nicht verzögert.

In einer weiteren Ausführungsform ist das Telegramm als Ethernet Telegramm ausgebildet, das im Kopfabschnitt ein Zieladressfeld und ein Absenderadressfeld aufweist. Das Zieladressfeld und das Absenderadressfeld sind jeweils als MAC-Adressenfeld (MAC: Media Access Control) ausgebildet. Der Kopfabschnitt umfasst ein TAG-Feld, das die Telegramm-Kennung aufweist. Ferner weist der Kopfabschnitt ein Protokollfeld für ein verwendetes Protokoll auf. Das Telegramm nutzt den bekannten Ethernet Datenframe Aufbau, also das bestimmte Format für eine paketorientierte Übertragung der Daten nach der IEEE-Norm 802.3. Somit kann eine verbesserte Kompatibilität mit anderen Systemen, die ebenfalls die normierte Paketübertragung unterstützen, mithilfe des vorgeschlagenen Verfahrens unter der Verwendung der vorgeschlagenen Datenstruktur bereitgestellt werden.

Gemäß einer weiteren Ausführungsform ist das Telegramm als EtherCAT Telegramm ausgebildet. Der Datenabschnitt umfasst einen weiteren Kopfabschnitt, wobei der weitere Kopfabschnitt ein Längenfeld, ein Reservefeld und das Datenfeld aufweist. Das Datenfeld ist als Typfeld und das Datenelement als EtherCAT Protokolltyp ausgebildet. Das Telegramm kann vorteilhaft als EtherCAT Telegramm ausgebildet sein und das bewährte echtzeitfähige EtherCAT Datenübertragungsprotokoll nutzen. Dabei umfasst der EtherCAT Protokolltyp des Typfelds den zweiten Wert, der standardmäßig mit dem Wert eins (in der Darstellung des Hexadezimalsystems) die Freigabe der Verarbeitung des Telegramms, das heißt eine Adressierung der Slaveteilnehmer eines Segments angibt. Das Typfeld kann als 4 Bit umfassendes Feld ausgestaltet sein, wobei damit eine Darstellung von 16 verschiedenen Protokolltypen möglich ist (2⁴ = 16) und dadurch einfach ein weiterer Wert des Protokolltyps für die Sperrung der Verarbeitung des Telegramms genutzt werden kann. Der weitere Wert des Protokolltyps, also der erste Wert des EtherCAT Types, der verschieden von dem zweiten Wert ausgebildet ist, kann folglich für die Anzeige der Sperrung der Verarbeitung des Telegramms für die Slaveteilnehmer eines Segments umgesetzt werden.

Erfindungsgemäß wird überdies ein Entsperrer für ein Automatisierungsnetzwerk vorgeschlagen, wobei der Entsperrer ausgelegt ist, ein Verfahren zur Datenübertragung auszuführen, und eine Datenstruktur in dem Verfahren zu verwenden. Der Entsperrer kann vorteilhaft als Bindeglied zwischen den einzelnen Segmenten mit Slaveteilnehmern eingesetzt werden, und dabei selbst nicht Teil der einzelnen Segmente sein. Gleichwohl können die Slaveteilnehmer auch in einer linearen Kette angeordnet sein und mehrere Entsperrern dazwischen aufweisen, wobei die Entsperrer dabei selbst als ein Teil eines Segments an Slaveteilnehmern ausgebildet sein können. Auch können die Entsperrer als Netzwerkverteiler ausgebildet sein und mehrere Ein-/Ausgangs-Ports aufweisen, an denen jeweils separate Segmente mit Slaveteilnehmern angeschlossen sind. Auch ist denkbar, dass ein weiterer Ein-/Ausgangs-Port der als Netzwerkverteiler ausgebildeten Entsperrer entsprechend eingestellt ist, sodass die als Netzwerkverteiler ausgebildeten Entsperrer sowohl Teil eines Segments sein können und hierbei als Slaveteilnehmer arbeiten können, als auch an den mehreren Ein-/Ausgangs-Ports separate Segmente mit Slaveteilnehmern umfassen. Insbesondere ist der Einsatz von mehreren Entsperrern im Automatisierungsnetzwerk denkbar, die als Slaveteilnehmer und/oder als Netzwerkverteiler fungieren können.

Beispielsweise kann eine Unterteilung eines EtherCAT Netzwerks in Segmente derart erfolgen, dass der erste Slaveteilnehmer in einem Segment eine Position Null erhält. Denn beim Einschalten weist ein Slaveteilnehmer in der Regel keine Adresse auf, sondern eine Initialisierung erfolgt über die Position des Slaveteilnehmers. Ein EtherCAT Telegramm weist Datagramme auf, diese umfassen jeweils einen Datagramm Kopfabschnitt, wobei der Datagramm Kopfabschnitt ein Adressfeld umfasst. Das Adressfeld weist einen Wert auf, den jeder Slaveteilnehmer im EtherCAT Netzwerk inkrementiert, das heißt wertmäßig erhöht. Mit dem Wert Null des Adressfeldes, das der obigen Position Null des ersten Slaveteilnehmers in einem Segment entspricht, weiß der entsprechende Slaveteilnehmer, dass kein dem entsprechenden Slaveteilnehmer vorausgehender Slaveteilnehmer den Wert des Adressfeldes inkrementieren kann. Folglich erkennt der erste Slaveteilnehmer in dem Segment über den Wert Null, dass der erste Slaveteilnehmer als solcher adressiert ist. Insbesondere kann also eine Unterteilung des EtherCAT Netzwerks in Segmente erfolgen, wenn ein als Netzwerkverteiler ausgebildeter Entsperrer mehr als zwei Slaveteilnehmer eines Segments an einem Ein-/Ausgangs-Port und einem weiteren Ein-/Ausgangs-Port der mehreren Ein-/Ausgangs-Ports des als Netzwerkverteiler ausgebildeten Entsperrers aufweist. In dem Fall können an den mehreren Ein-/Ausgangs-Ports, ausgenommen des Ein-/Ausgangs-Ports und des weiteren Ein-/Ausgangs-Ports, jeweils eigenständige Segmente mit Slaveteilnehmern gebildet werden.

Die vorstehend erläuterten und/oder in den Unteransprüchen wiedergegebenen vorteilhaften Aus- und Weiterbildungen der Erfindung können - außer zum Beispiel in Fällen eindeutiger Abhängigkeiten oder unvereinbarer Alternativen - einzeln oder aber auch in beliebiger Kombination miteinander zur Anwendung kommen.

Die oben beschriebenen Eigenschaften, Merkmale und Vorteile dieser Erfindung, sowie die Art und Weise, wie diese erreicht werden, werden klarer und deutlicher verständlich in Zusammenhang mit der folgenden Beschreibung von Ausführungsbeispielen, die im Zusammenhang mit den schematischen Zeichnungen näher erläutert werden. Es zeigen:
Figur 1 einen schematischen Aufbau eines Automatisierungsnetzwerks, in dem ein Verfahren zur Datenübertragung ausgeführt wird;
Figur 2 einen schematischen ersten bis vierten Telegrammaufbau für eine Datenstruktur, die im Verfahren zur Datenübertragung im Automatisierungsnetzwerk in Figur 1 eingesetzt wird; und
Figur 3 einen schematischen fünften und sechsten Telegrammaufbau für die Datenstruktur nach Figur 2.

Es wird darauf hingewiesen, dass die Figuren lediglich schematischer Natur und nicht maßstabsgetreu sind. In diesem Sinne können in den Figuren gezeigte Komponenten und Elemente zum besseren Verständnis übertrieben groß oder verkleinert dargestellt sein. Ferner wird darauf hingewiesen, dass die Bezugszeichen in den Figuren unverändert gewählt worden sind, wenn es sich um gleich ausgebildete Elemente und/oder Komponenten und/oder Größen handelt.

Automatisierungsnetzwerke sind üblicherweise als Feldbussysteme verwirklicht, bei denen die Netzwerkeilnehmer über den Feldbus miteinander vernetzt sind. Die Netzwerkteilnehmer können als ein Masterteilnehmer, als mehrere Slaveteilnehmer und als wenigstens ein Entsperrer ausgebildet sein, wenn die Zugriffberechtigung für das Feldbussystem auf der Master-Slave-Hierarchie beruht. Die genannten Netzwerkteilnehmer können dazu ausgelegt sein mit Steuerungseinheiten Daten austauschen, wobei dazu in der Regel echtzeitfähige Datenübertragungsprotokolle wie beispielsweise das EtherCAT Datenübertragungsprotokoll eingesetzt werden. Daneben kann das Automatisierungsnetzwerk auch Netzwerkteilnehmer aufweisen, die andere Datenübertragungsprotokolle verarbeiten können wie beispielsweise TCP/IP (TCP/IP: Transmission Control Protocol/Internet Protocol), Ethernet, etc. Diese Netzwerkteilnehmer müssen nicht für Steuerungsaufgaben adressiert sein. Beispielsweise können diese Datenübertragungsprotokoll-Daten Diagnoseinformationen über das Automatisierungsnetzwerk umfassen. Die Erfindung wird nachfolgend beispielhaft anhand des echtzeitfähigen EtherCAT Datenübertragungsprotokolls erläutert.

Die über das Datenleitungsnetz im Automatisierungsnetzwerk angeschlossenen oben genannten Netzwerkteilnehmer können über Netzwerkverteiler, sogenannte "Switche" oder "Branche" miteinander verbunden sein. Die Netzwerkverteiler dienen zudem dazu, den Datenaustausch der Teilnehmer in den Segmenten zu koordinieren und die Telegramme rechtzeitig an ihr Ziel zu leiten. In Automatisierungsnetzwerken, in denen der Datenverkehr mittels Telegrammen mit zugrundeliegendem EtherCAT Datenübertragungsprotokoll erfolgt, nachfolgend als EtherCAT Netzwerke bezeichnet, werden die Telegramme durch alle Slaveteilnehmer durchgeleitet und im Falle einer an einer Datenleitung angeschlossenen Kette an Slaveteilnehmern von dem letzten Slaveteilnehmer an den Masterteilnehmer zurückgesendet. Eine gezielte Adressierung einzelner Segmente mit Slaveteilnehmern mit EtherCAT Telegrammen ist bislang nicht verwirklicht.

Die Kernidee der vorliegenden Erfindung liegt in der gezielten Freischaltung der EtherCAT Telegramme für die Verarbeitung durch die Slaveteilnehmer in einem Segment und der Möglichkeit, die EtherCAT Telegramme auf dem Weg zu dem mit dem Telegramm anzusprechenden Segment mit Slaveteilnehmern für nicht adressierte Segmente mit Slaveteilnehmern für die Verarbeitung zu sperren. Die Erfindung ist jedoch nicht auf das EtherCAT Datenübertragungsprotokoll beschränkt und kann in allen Automatisierungsnetzwerken eingesetzt werden, in denen die Telegramme stets durch alle Slaveteilnehmer durchgeleitet werden.

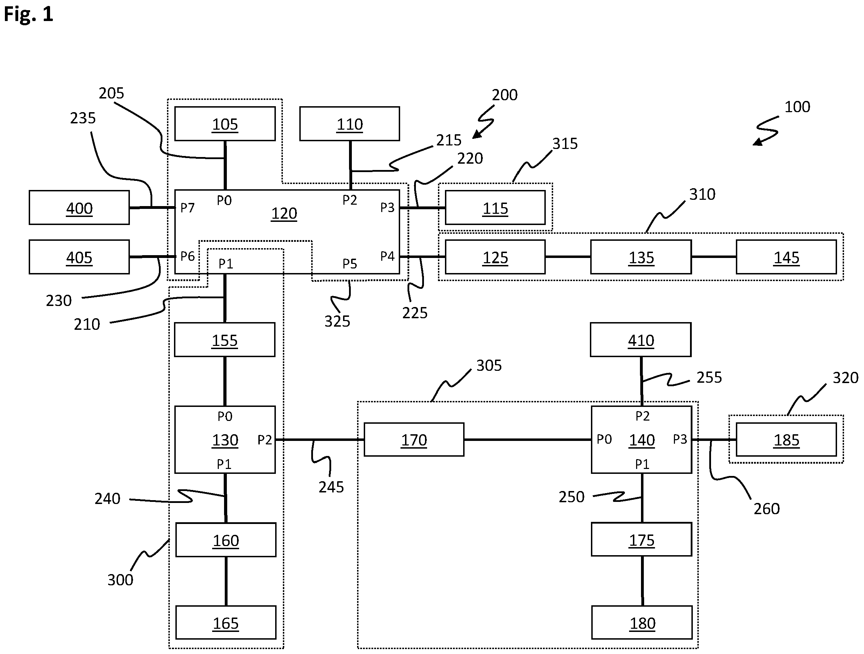

Figur 1 zeigt einen schematischen Aufbau eines Automatisierungsnetzwerks 100, in dem ein Verfahren zur Datenübertragung ausgeführt wird. Das Automatisierungsnetzwerk 100 umfasst einen Masterteilnehmer 105 und mehrere Slaveteilnehmer, die über ein Datenleitungsnetz 200 miteinander verbunden sind. Der Masterteilnehmer 105 ist über eine erste Datenleitung 205 mit einem ersten Ein-/Ausgangs-Port P0 eines ersten Entsperrers 120 verbunden und kann ein sechstes Segment 325 bilden. Der erste Entsperrer 120 kann über einen dritten Ein-/Ausgangs-Port P2 über eine dritte Datenleitung 215 mit einem weiteren Masterteilnehmer 110 verbunden sein. Dabei kann beispielsweise nur der Masterteilnehmer 105, der über die erste Datenleitung 205 mit dem ersten Ein-/Ausgangs-Port P0 des ersten Entsperrers 120 verbunden ist, dazu ausgelegt sein, eine zentrale Konfiguration des Automatisierungsnetzwerks 100 vorzunehmen.

Über einen vierten Ein-/Ausgangs-Port P3 des ersten Entsperrers 120 und eine vierte Datenleitung 220 kann der erste Entsperrer 120 mit einem vierten Segment 315 des Automatisierungsnetzwerks 100 verbunden sein. Beispielsweise kann das vierte Segment 315 einen ersten Slaveteilnehmer 115 umfassen. Zur besseren Übersichtlichkeit werden in Figur 1 lediglich die Ein-/Ausgangs-Ports der Entsperrer dargestellt. Gleichwohl weisen die anderen Teilnehmer in dem Automatisierungsnetzwerk 100 Ein-/Ausgangs-Ports auf, über die die Teilnehmer über das Datenleitungsnetz 200 miteinander verbunden sind. Nachfolgend wird auf diesen Aspekt nicht mehr eingegangen. Der erste Slaveteilnehmer 115 kann dabei beispielsweise als Kopplerelement EK1100 der Firma Beckhoff Automation GmbH & Co. KG ausgebildet sein und dazu ausgelegt sein, eine Datenkommunikation mit einer ersten Datenübertragungsrate mit 100 Mbit/s bzw. einer ersten Symbolrate von 100 MBaud zu übertragen. Das vierte Segment 315 kann exemplarisch wie beschrieben ausgebildet sein. Darüber hinaus ist denkbar, dass das vierte Segment 315 von der beschriebenen Ausgestaltung abweicht und mehrere Slaveteilnehmer umfasst.

Der erste Entsperrer 120 kann über einen fünften Ein-/Ausgangs-Port P4 des ersten Entsperrers 120 und eine fünfte Datenleitung 225 mit einem dritten Segment 310 des Automatisierungsnetzwerks 100 verbunden sein. Das dritte Segment 310 kann einen zweiten Slaveteilnehmer 125, einen dritten Slaveteilnehmer 135 und einen vierten Slaveteilnehmer 145 umfassen. Der zweite Slaveteilnehmer 125 kann zum Beispiels als ein Kopplerelement ausgebildet sein. Der dritte Slaveteilnehmer 135 kann beispielsweise als Simple Branch ausgebildet sein, wobei der Simple Branch dazu ausgelegt sein kann, neben dem in dem Verfahren zur Datenübertragung verwendeten Protokoll, auch noch Routing-Funktionalität aufzuweisen und weitere Protokolle, wie zum Beispiel das TCP/IP-Protokoll (Transmission Control Protocol/Internet Protocol), zu unterstützen.

Der vierte Slaveteilnehmer 145 kann zum Beispiel ebenfalls als Simple Branch ausgebildet sein. Der erste bis vierte Slaveteilnehmer 125, 135, 145 in dem dritten Segment 310 können gleichermaßen dazu ausgelegt sein, eine Datenkommunikation mit einer zweiten Datenübertragungsrate mit 1 Gbit/s bzw. mit einer zweiten Symbolrate von 1 GBaud umzusetzen. Das dritte Segment 310 kann also beispielsweise im Unterschied zum vierten Segment 315 statt mit der ersten Datenübertragungsrate mit 100 Mbit/s mit der zweiten Datenübertragungsrate mit 1 Gbit/s betrieben werden.

Beispielsweise kann an einem sechsten Ein-/Ausgangs-Port P5 des ersten Entsperrers 120 keine Datenleitung mit einem oder mehreren Slaveteilnehmer angeschlossen sein. Hierbei ist der sechste Ein-/Ausgangs-Port P5 exemplarisch gewählt worden. Es ist ferner denkbar, dass ein anderer Ein-/Ausgangs-Port des ersten Entsperrers 120 derart ausgebildet ist.

Über einen siebten Ein-/Ausgangs-Port P6 und eine sechste Datenleitung 230 ist der erste Entsperrer 120 mit einem zweiten Netzwerkteilnehmer 405 verbunden. Dabei kann der zweite Netzwerkteilnehmer 405 nicht als Slaveteilnehmer, sondern als Ethernetteilnehmer ausgebildet sein, der lediglich das Ethernet Protokoll verarbeitet. In diesem Zusammenhang ist denkbar, dass der zweite Netzwerkteilnehmer 405 kein eigenständiges Segment im Automatisierungsnetzwerk bildet. Beispielsweise ist der zweite Netzwerkteilnehmer 405 dazu ausgelegt die Datenkommunikation mit der zweiten Datenübertragungsrate mit 1 Gbit/s umzusetzen.

Über einen achten Ein-/Ausgangs-Port P7 und eine siebte Datenleitung 235 kann der erste Entsperrer 120 mit einem ersten Netzwerkteilnehmer 400 verbunden sein. Der erste Netzwerkteilnehmer 400 kann ebenfalls ausgelegt sein, das Ethernet Protokoll zu verarbeiten und einen Ethernetteilnehmer darstellen. Beispielsweise kann der Ethernetteilnehmer ausgebildet sein die Datenkommunikation mit der ersten Datenübertragungsrate mit 100 Mbit/s umzusetzen. Gleichermaßen wie der zweite Netzwerkteilnehmer 405 kann auch der erste Netzwerkteilnehmer 400 kein eigenständiges Segment in dem Automatisierungsnetzwerk 100 bilden.

Der erste Entsperrer 120 kann beispielsweise Teil des sechsten Segments 325 sein. Über einen zweiten Ein-/Ausgangs-Port P1 und eine zweite Datenleitung 210 kann der erste Entsperrer 120 beispielsweise mit einem fünften Slaveteilnehmer 155 verbunden sein. Der fünfte Slaveteilnehmer 155 kann beispielsweise für eine Datenkommunikation mit der zweiten Datenübertragungsrate ausgelegt sein. Der fünfte Slaveteilnehmer 155 kann über die zweite Datenleitung 210 mit einem ersten Ein-/Ausgangs-Port P0 eines zweiten Entsperrers 130 verbunden sein.

Der zweite Entsperrer 130 kann über einen zweiten Ein-/Ausgangs-Port P1 des zweiten Entsperrers 130 und über eine achte Datenleitung 240 mit einem sechsten Slaveteilnehmer 160 verbunden sein. Zum Beispiel kann der sechste Slaveteilnehmer 160 ebenfalls als oben stehender Simple Branch ausgebildet sein. Weiterhin kann der sechste Slaveteilnehmer 160 nachfolgend an der achten Datenleitung 240 einen siebten Slaveteilnehmer 165 aufweisen. Der siebte Slaveteilnehmer 165 kann den letzten Slaveteilnehmer in einem ersten Segment 300 bilden, das sich von dem zweiten Ein-/Ausgangs-Port P1 des ersten Entsperrers 120 bis zum siebten Slaveteilnehmer 165 erstreckt, da die Slaveteilnehmer in den einzelnen Segmenten in der Regel in einer Kette angeordnet sind. Ferner kann der siebte Slaveteilnehmer 165 als ein Kopplerelement ausgebildet sein. Beispielsweise kann der zweite Entsperrer 130 Teil des ersten Segments 300 sein, sofern der zweite Ein-/Ausgangs-Port P1 des zweiten Entsperrers 130 dafür eingestellt ist.

Das erste Segment 300, beginnend mit dem zweiten Ein-/Ausgangs-Port P1 des ersten Entsperrers 120, dem fünften Slaveteilnehmer 155, dem zweiten Entsperrer 130, dem sechsten Slaveteilnehmer 160 und dem siebten Slaveteilnehmer 165 kann für eine Datenkommunikation mit der zweiten Datenübertragungsrate mit 1 Gibt/s ausgelegt sein, da der fünfte Slaveteilnehmer 155, der sechste Slaveteilnehmer 160 und der siebte Slaveteilnehmer 165 beispielsweise derart ausgelegt sind. Es ist jedoch auch denkbar, dass der fünfte Slaveteilnehmer 155, der sechste Slaveteilnehmer 160 und der siebte Slaveteilnehmer 165 gleichermaßen wie der erste Entsperrer 120 und der zweite Entsperrer 130 in der Lage sind, sowohl die zweite Datenübertragungsrate mit 1 Gbit/s als auch die erste Datenübertragungsrate mit 100 Mbit/s umzusetzen. In diesem Zusammenhang kann das erste Segment 300 weitere, nicht dargestellte Slaveteilnehmer umfassen, die ausgelegt sind, die erste Datenübertragungsrate umzusetzen. In dem geschilderten Fall kann die Datenübertragungsrate für die Teilnehmer des ersten Segments 300 einheitlich auf die erste Datenübertragungsrate gesetzt werden. Dies gilt für die anderen Segmente gleichermaßen, auch sie können weitere Slaveteilnehmer aufweisen, die ausgelegt sind nur die erste Datenübertragungsrate umzusetzen. Für die Beschreibung der anderen Segmente wird jedoch nicht erneut auf diese Eigenschaft hingewiesen.

Über einen dritten Ein-/Ausgangs-Port P2 und eine neunte Datenleitung 245 ist der zweite Entsperrer 130 mit einem achten Slaveteilnehmer 170 verbunden. Der achte Slaveteilnehmer 170 bildet beispielsweise den ersten Slaveteilnehmer in einem zweiten Segment 305. Beispielsweise kann der achte Slaveteilnehmer 170 für eine Datenkommunikation mit der zweiten Datenübertragungsrate ausgelegt sein. Der achte Slaveteilnehmer 170 ist über die achte Datenleitung 240 ferner mit einem ersten Ein-/Ausgangs-Port P0 eines dritten Entsperrers 140 verbunden. Der dritte Entsperrer 140 kann Teil des zweiten Segments 305 sein. Über einen dritten Ein-/Ausgangs-Port P2 und eine elfte Datenleitung 255 kann der dritte Entsperrer 140 mit einem dritten Netzwerkteilnehmer 410 verbunden sein. Zum Beispiel ist der dritte Netzwerkteilnehmer 410 als Ethernet Switch ausgebildet, der das Ethernet Protokoll verarbeitet. In dem Automatisierungsnetzwerk 100 kann für den dritten Netzwerkteilnehmer 410 gleichermaßen wie für den ersten und zweiten Netzwerkteilnehmer 400, 405 vorgesehen sein, kein eigenständiges Segment des Automatisierungsnetzwerks 100 zu bilden, da beispielsweise nur Netzwerkteilnehmer, die das EtherCAT Datenübertragungsprotokoll verarbeiten dafür vorgesehen sind.

Der dritte Entsperrer 140 kann über einen vierten Ein-/Ausgangs-Port P3 und eine zwölfte Datenleitung 260 mit einem elften Slaveteilnehmer 185 eines fünften Segments 320 des Automatisierungsnetzwerks 100 verbunden sein. Beispielsweise kann der elfte Slaveteilnehmer 185 ausgelegt sein die erste Datenübertragungsrate umzusetzen. Über einen zweiten Ein-/Ausgangs-Port P1 und eine zehnte Datenleitung 250 kann der dritte Entsperrer 140 mit einem neunten Slaveteilnehmer 175 verbunden sein. Der neunte Slaveteilnehmer 175 kann Teil des zweiten Segments 305 sein und als ein Kopplerelement ausgebildet sein. Der neunte Slaveteilnehmer 175 kann für die Umsetzung der zweiten Datenübertragungsrate ausgelegt sein. Nachfolgend an den neunten Slaveteilnehmer 175 kann an die zehnte Datenleitung 250 ein zehnter Slaveteilnehmer 180 angeschlossen sein. Der zehnte Slaveteilnehmer 180 kann beispielsweise den letzten Slaveteilnehmer, der in einer Kette angeordneten Slaveteilnehmer in dem zweiten Segment 305 bilden.

Das in Figur 1 gezeigte Automatisierungsnetzwerk 100 kann beispielsweise eine Baumstruktur aufweisen, wobei der Masterteilnehmer 105 eine Wurzel der Baumstruktur bilden kann und die einzelnen Slaveteilnehmer und Entsperrer, die in Segmenten angeordnete sind, können als Äste der Baumstruktur fungieren. Das Automatisierungsnetzwerk 100 kann insbesondere als EtherCAT Netzwerk ausgebildet sein, das heißt die Datenübertragung kann mittels dem echtzeitfähigen EtherCAT Protokoll erfolgen. In diesem Zusammenhang stellen die gezeigten Segmente EtherCAT Segmente dar, wobei der erste bis dritte Netzwerkteilnehmer 400, 405, 410 jeweils kein EtherCAT Segment bilden, da der erste bis dritte Netzwerkteilnehmer 400, 405, 410 beispielsweise nicht für eine Verarbeitung des EtherCAT Protokolls ausgebildet sind.

Der Masterteilnehmer 105 kann dazu ausgelegt sein, ein Konfigurationstelegramm an den ersten Entsperrer 120 über die erste Datenleitung 205 zu versenden, um dem ersten Entsperrer 120 eine Telegramm-Kennung eines Segments anzuzeigen, das dem ersten Entsperrer 120 zugeordnet ist. Die Zuordnung der Telegramm-Kennung eines Segments zu dem entsprechenden Ein-/Ausgangs-Port des ersten Entsperrers 120, über den der erste Entsperrer 120 das gesperrte oder ein entsperrtes Telegramm ausgibt, kann beispielsweise in einer in Figur 1 nicht dargestellten Speichereinheit des ersten Entsperrers 120 hinterlegt werden. Auch ist denkbar, dass die Zuordnung der einzelnen Ein-/Ausgangs-Ports des ersten Entsperrers 120 zu den jeweiligen Telegramm-Kennungen der Segmente bereits in der Speichereinheit des ersten Entsperrers 120 hinterlegt ist. Gleichzeitig kann der Masterteilnehmer 105 mit dem Konfigurationstelegramm eine Einstellung des ersten Entsperrers 120 vornehmen, beispielsweise wie der erste Entsperrer 120 verfahren soll, wenn der erste Entsperrer 120 ein für eine Verarbeitung gesperrtes Telegramm, nachfolgend als gesperrtes Telegramm bezeichnet, mit einer Telegramm-Kennung über den ersten Ein-/Ausgangs-Port P0 empfängt. Der Masterteilnehmer 105 kann das Konfigurationstelegramm zu Einstellungszwecken vor dem eigentlichen Telegrammverkehr im Steuerungsbetrieb des Automatisierungsnetzwerks 100 versenden.

Versendet der Masterteilnehmer 105 ein gesperrtes Telegramm mit einer Telegramm-Kennung über die erste Datenleitung 205 an den ersten Entsperrer 120, so prüft der erste Entsperrer 120 beim Empfang des gesperrten Telegramms anhand der Telegramm-Kennung, ob das gesperrte Telegramm für das dem ersten Entsperrer 120 zugeordnete Segment bestimmt ist. Darüber hinaus kann der erste Entsperrer 120 über die jeweilige Telegramm-Kennung ein Routing des gesperrten Telegramms über die einzelnen Ein-/Ausgangs-Ports des ersten Entsperrers 120 durchführen. Die Telegramm-Kennung kann beispielsweise als Segment-Adresse verwirklicht sein, über die die einzelnen Segmente ansprechbar sind. Ist die Telegramm-Kennung des vom Masterteilnehmer 105 versendeten gesperrten Telegramms beispielsweise dem ersten Segment 300 zugeordnet, so kann der erste Entsperrer 120 aufgrund der mit dem Konfigurationstelegramm vorgenommenen Einstellung, das mit der Telegramm-Kennung ansprechbare erste Segment 300 dem zweiten Ein-/Ausgangs-Port P1 des ersten Entsperrers 120 zuordnen.

Für die Strukturierung des Automatisierungsnetzwerks 100 in Segmente, die in einem EtherCAT Netzwerk als EtherCAT Segmente ausgebildet sind, sind verschiedene Ausgestaltungen denkbar. Beispielsweise kann ein EtherCAT Segment an einem Ein-/Ausgangs-Port eines Entsperrers, der als Netzwerkverteiler ausgebildet ist, beginnen, über den nur Slaveteilnehmer angeschlossen sind. Beispielsweise kann sich ein solches EtherCAT Segment über den zweiten Slaveteilnehmer 125, den dritten Slaveteilnehmer 135 und den vierten Slaveteilnehmer 145 erstrecken und das dritte Segment 310 umfassen. Ebenso kann sich ein solches EtherCAT Segment über den ersten Slaveteilnehmer 115 erstrecken, also dem vierten Segment 315. Ein weiteres Beispiel für ein derartig ausgebildetes EtherCAT Segment bildet das fünfte Segment 320 mit dem elften Slaveteilnehmer 185.

Weiterhin kann ein EtherCAT Segment an einem Ein-/Ausgangs-Port eines Entsperrers, der als Netzwerkverteiler ausgebildet ist, beginnen, über den Slaveteilnehmer sowie weitere Entsperrer, die als Slaveteilnehmer ausgebildet sein können, angeschlossen sind, wobei bei dem als Slaveteilnehmer ausgebildeten weiteren Entsperrer dann ein weiterer Ein-/Ausgangs-Port dafür eingestellt sein muss. Beispielsweise kann ein derart ausgestaltetes EtherCAT Segment den fünften Slaveteilnehmer 155, den zweiten Entsperrer 130 (sofern der zweite Ein-/Ausgangs-Port P1 des zweiten Entsperrers 130 entsprechend eingestellt ist), den sechsten Slaveteilnehmer 160 und den siebten Slaveteilnehmer 165 umfassen, also dem ersten Segment 300 entsprechen. Gemäß einem weiteren Beispiel kann das EtherCAT Segment den achten Protokoll-Netzwerkteilnehmer 170, den dritten Entsperrer 140, der als Slaveteilnehmer ausgebildet sein kann, und einen derart eingestellten zweiten Ein-/Ausgangs-Port P1 umfassen kann, den neunten Slaveteilnehmer 175 sowie den zehnten Protokoll-Netzwerkteilnehmer 180 umfassen. Demnach kann das EtherCAT Segment in Form des zweiten Segments 305 ausgebildet sein.

Überdies kann ein EtherCAT Segment bei dem Masterteilnehmer 105 beginnen und bei dem nächsten Entsperrer enden. Beispielsweise kann das EtherCAT Segment also den Masterteilnehmer 105 umfassen sowie den ersten Entsperrer 120 und in Form des sechsten Segments 325 umgesetzt sein.

Bevor der erste Entsperrer 120 das gesperrte Telegramm mit der Telegramm-Kennung des ersten Segments 300, die beispielsweise das Symbol a umfassen kann, über den zweiten Ein-/Ausgangs-Port P1 des ersten Entsperrers 120 ausgibt, kann mit dem Konfigurationstelegramm eingestellt worden sein, dass der erste Entsperrer 120 ein Datenfeld des Telegramms, das ein Datenelement mit einem ersten Wert umfasst, auf einen zweiten Wert setzt, um den Slaveteilnehmern in dem ersten Segment 300 eine Freigabe der Verarbeitung des Telegramms, nachfolgend als entsperrtes Telegramm bezeichnet, anzuzeigen. Überdies ist denkbar, dass der erste Entsperrer 120 das gesperrte Telegramm bereits nach dem Empfang des gesperrten Telegramms über den ersten Ein-/Ausgangs-Port P0 des ersten Entsperrers 120 entsperrt hat. Beispielsweise kann der fünfte Slaveteilnehmer 155 die an ihn adressierten Ausgangsdaten des entsperrten Telegramms mit der Telegramm-Kennung a des ersten Segments 300 im Durchlauf lesen und seine Eingangsdaten in das entsperrte Telegramm legen, das von dem fünften Slaveteilnehmer 155 über die zweite Datenleitung 210 an den zweiten Entsperrer 130 weitergeleitet und vom zweiten Entsperrer 130 auf dem ersten Ein-/Ausgangs-Port P0 empfangen wird.

Nachdem der zweite Entsperrer 130 die an ihn adressierten Ausgangsdaten des entsperrten Telegramms mit der Telegramm-Kennung a des ersten Segments 300 "on the fly" gelesen und seine Eingangsdaten in das entsperrte Telegramm gelegt hat, kann der zweite Entsperrer 130 das entsperrte Telegramm über den zweiten Ein-/Ausgangs-Port P1 über die achte Datenleitung 240 an den sechsten Slaveteilnehmer 160 weiterleiten. Dies setzt voraus, dass der zweite Ein-/Ausgangs-Port P1 des zweiten Entsperrers 130 entsprechend eingestellt ist, sodass der zweite Entsperrer 130 das entsperrte Telegramm mit der Telegramm-Kennung a des ersten Segments 300 als Slaveteilnehmer verarbeiten kann. Der sechste Slaveteilnehmer 160 kann analog adressierte Ausgangsdaten lesen und Eingangsdaten in das entsperrte Telegramm legen und das entsperrte Telegramm über die achte Datenleitung an den siebten Slaveteilnehmer 165 weiterleiten. Der siebte Slaveteilnehmer 165 liest ebenso die an ihn adressierten Ausgangsdaten und fügt entsprechend Eingangsdaten in das entsperrte Telegramm ein. Weiterhin erkennt der siebte Slaveteilnehmer 165, dass nachfolgend nach ihm kein weiterer Slaveteilnehmer mehr an der achten Datenleitung 240 angeschlossen ist. Beispielsweise kann dazu ein Ein-/Ausgangs-Port des siebten Slaveteilnehmers 165 mit einem Schalter, den der siebte Slaveteilnehmer 165 umfassen kann, kurzgeschlossen sein und der siebte Slaveteilnehmer 165 derart eingestellt sein, dass der siebte Slaveteilnehmer 165 daraufhin das entsperrte Telegramm über die achte Datenleitung 240 an den zweiten Entsperrer 130 versendet. Der zweite Entsperrer 130 kann derart eingestellt sein, dass der zweite Entsperrer 130 das entsperrte Telegramm über die zweite Datenleitung 210 an den ersten Entsperrer 120 versendet. Der erste Entsperrer 120 kann derart konfiguriert sein, dass der erste Entsperrer 120 das entsperrte Telegramm von dem siebten Slaveteilnehmer 165 über die erste Datenleitung 205 an den Masterteilnehmer zurücksendet.

Der erste Entsperrer 120 und der zweite Entsperrer 130 können jeweils als Slaveteilnehmer ausgebildet sein, um das Telegramm vom Masterteilnehmer 105 zu verarbeiten. Zusätzlich zur obigen Beschreibung kann der erste Entsperrer 120 neben der Eigenschaft, dass der erste Entsperrer 120 das vom Masterteilnehmer 105 versendete gesperrte Telegramm entsperrt, indem der erste Entsperrer 120 den ersten Wert des Datenelements des Telegramms auf den zweiten Wert setzt, auch dazu ausgelegt sein, das entsperrte Telegramm zu verarbeiten. Dies gilt für den dritten Entsperrer 140 in gleichem Maße, denn auch der dritte Entsperrer 140 kann als Slaveteilnehmer ausgebildet sein und dazu ausgelegt sein, entsperrte Telegramme zu verarbeiten.

Ferner können der erste bis dritte Entsperrer 120, 130, 140 als Netzwerkverteiler ausgelegt sein und die Telegramm-Kennung für das Routing des Telegramms über die einzelnen Ein-/Ausgangs-Ports des ersten bis dritten Entsperrers 120, 130, 140 nutzen. Im Zusammenhang mit der für das Routing genutzten Telegramm-Kennung kann das an dem vierten Ein-/Ausgangs-Port P3 und/oder das an dem fünften Ein-/Ausgangs-Port P4 des ersten Entsperrers 120 angeschlossene vierte Segment 315 und/oder angeschlossene dritte Segment 310 insbesondere jeweils ein eigenständiges Segment bilden, und nicht dem Segment entsprechen, in dem der erste Entsperrer 120 selbst angeordnet ist. Der erste Entsperrer 120 bildet mit dem Masterteilnehmer 105 das sechste Segment 325. Alternativ kann der erste Entsperrer 120 auch Teil des ersten Segments 300 sein.

Im Zusammenhang mit der für das Routing genutzten Telegramm-Kennung kann das an dem dritten Ein-/Ausgangs-Port P2 des zweiten Entsperrers 130 angeschlossene zweite Segment 305 insbesondere ein eigenständiges Segment bilden, und nicht dem Segment entsprechen, in dem der zweite Entsperrer 130 selbst angeordnet ist. Ferner kann im Zusammenhang mit der für das Routing genutzten Telegramm-Kennung das an dem vierten Ein-/Ausgangs-Port P3 des dritten Entsperrers 140 angeschlossene fünfte Segment 320 insbesondere ein eigenständiges Segment bilden, und nicht dem Segment entsprechen, in dem der dritte Entsperrer 140 selbst angeordnet ist. In der in Figur 1 gezeigten Ausführungsform sind beispielsweise der zweite Entsperrer 130 und der dritte Entsperrer 140 jeweils Teil des ersten Segments 300 und des zweiten Segments 305, da die zweiten Ein-/Ausgangs-Ports P1 jeweils dafür eingestellt sein können. Der erste Entsperrer 120 befindet sich beispielsweise im sechsten Segment 325. Daneben kann der erste Entsperrer 120 auch Teil des ersten Segments 300 sein, sofern der zweite Ein-/Ausgangs-Port P1 des ersten Entsperrers 120 entsprechend eingestellt ist. Alternativ ist ebenfalls denkbar, dass der zweite Entsperrer 130 sowie der dritte Entsperrer 140 jeweils ein separates Segment bilden. Überdies können der erste bis dritte Entsperrer 120, 130, 140 auch derart ausgelegt sein, dass der erste bis dritte Entsperrer 120, 130, 140 jeweils nicht Teil eines Segments sind, an ihren Ein-/Ausgangs-Ports können aber einzelne Segmente angeschlossen sein.

Beim Empfang eines gesperrten Telegramms mit einer Telegramm-Kennung, die einem Segment des ersten Entsperrers 120 zugeordnet ist, wobei das Segment beispielsweise ein separates Segment an einem Ein-/Ausgangs-Port des ersten Entsperrers 120 sein kann, kann der erste Entsperrer 120 die Telegramm-Kennung für das Routing des gesperrten Telegramms über den in der Speichereinheit hinterlegten zugeordneten Ein-/Ausgangs-Port des ersten Entsperrers 120 nutzen. Vorher kann der erste Entsperrer 120 das gesperrte Telegramm für die Slaveteilnehmer zur Verarbeitung freigeben, in dem der erste Entsperrer 120 den ersten Wert des Datenelements auf den zweiten Wert setzt. Der erste Entsperrer 120 kann zudem ein gesperrtes Telegramm mit einer Telegramm-Kennung, die keinem Segment des ersten Entsperrers 120 zugeordnet ist, sondern beispielsweise dem ersten Segment 300 zugeordnet ist, in dem der zweite Entsperrer 130 angeordnet ist, die Telegramm-Kennung für das Routing des gesperrten Telegramms nutzen. Beispielsweise nutzt der erste Entsperrer 120 aufgrund der hinterlegten Zuordnung der Telegramm-Kennung mit dem Symbol b zu dem zweiten Segment 305 und über den dabei zu routenden Ein-/Ausgangs-Port den zweiten Ein-/Ausgangs-Port P1 des ersten Entsperrers 120.

Der erste Entsperrer 120 gibt das gesperrte Telegramm mit der Telegramm-Kennung b beispielsweise unverändert über den zweiten Ein-/Ausgangs-Port P1 des ersten Entsperrers 120 über die zweite Datenleitung 210 an den fünften Slaveteilnehmer 155. Der fünfte Slaveteilnehmer 155 liest einen Kopfabschnitt des gesperrten Telegramms mit der Telegramm-Kennung b im Durchlauf, bis zu dem Datenfeld, dass das Datenelement mit dem ersten Wert aufweist. Anhand des ersten Werts erkennt der fünfte Slaveteilnehmer 155, dass der fünfte Slaveteilnehmer 155 nicht zur Verarbeitung der Nutzdaten des gesperrten Telegramms bestimmt ist, und sendet das gesperrte Telegramm über die zweite Datenleitung 210 an den zweiten Entsperrer 130. Der zweite Entsperrer 130 empfängt das gesperrte Telegramm mit der Telegramm-Kennung b über den ersten Ein-/Ausgangs-Port P0 und erkennt anhand der Telegramm-Kennung b und der hinterlegten Zuordnung in der Speichereinheit, dass der der Telegramm-Kennung b und dem zweiten Segment 305 zugeordnete Ein-/Ausgangs-Port des zweiten Entsperrers 130 für die Ausgabe des Telegramms der dritte Ein-/Ausgangs-Port P2 des zweiten Entsperrers 130 ist. Vor der Ausgabe des gesperrten Telegramms über den dritten Ein-/Ausgangs-Port P2 entsperrt der zweite Entsperrer 130 das gesperrte Telegramm, in dem der zweite Entsperrer 130 den ersten Wert des Datenelements auf den zweiten Wert setzt, um dem achten Slaveteilnehmer 170 bei der Ausgabe des entsperrten Telegramms über den dritten Ein-/Ausgangs-Port P2 und die neunte Datenleitung 245 die Freigabe der Verarbeitung des Telegramms anzuzeigen.

Der achte Slaveteilnehmer 170 liest die an ihn adressierten Ausgangsdaten des Telegramms, also die Nutzdaten, im Durchlauf und legt seine Eingangsdaten in das entsperrte Telegramm, bevor der achte Slaveteilnehmer 170 das entsperrte Telegramm über die neunte Datenleitung 245 an den dritten Entsperrer 140 weiterleitet. Der dritte Entsperrer 140 kann durch die Eigenschaft, dass der dritte Entsperrer 140 ebenso wie der erste und zweite Entsperrer 120, 130, als Slaveteilnehmer ausgebildet sein können, wenn jeweils der zweite Ein-/Ausgangs-Port P1 dafür eingestellt ist, gleichermaßen durch das entsperrte Telegramm adressiert sein. Beispielsweise ist der zweite Ein-/Ausgangs-Port P1 des dritten Entsperrers 140 entsprechend eingestellt und der dritte Entsperrer 140 kann demnach als Slaveteilnehmer arbeiten. In dem Fall liest der dritte Entsperrer 140 die an ihn adressierten Ausgangsdaten im Telegramm im Durchlauf und legt seine Eingangsdaten in das entsperrte Telegramm, bevor der dritte Entsperrer 140 das entsperrte Telegramm über den der Telegramm-Kennung des zweiten Segments 305 zugeordneten zweiten Ein-/Ausgangs-Port P1 des dritten Entsperrers 140 über die zehnte Datenleitung 250 ausgibt.

Der neunte Slaveteilnehmer 175 empfängt das entsperrte Telegramm über die zehnte Datenleitung 250, liest die an ihn adressierten Ausgangsdaten des Telegramms, legt seine Eingangsdaten in das entsperrte Telegramm und versendet das entsperrte Telegramm über die zehnte Datenleitung 250 an den zehnten Slaveteilnehmer 180. Auch der zehnte Slaveteilnehmer 180 liest die an ihn adressierten Ausgangsdaten des entsperrten Telegramms im Durchlauf und legt seine Eingangsdaten in das entsperrte Telegramm. Zudem erkennt der zehnte Slaveteilnehmer 180, dass er der letzte Slaveteilnehmer in der Kette der Slaveteilnehmer im zweiten Segment 305 ist. Dies kann der zehnte Slaveteilnehmer 180 beispielsweise ebenfalls über einen mit einem Schalter kurzgeschlossenen weiteren Ein-/Ausgangs-Port des zehnten Slaveteilnehmers 180 erkennen, wie oben erläutert wurde.

Der zehnte Slaveteilnehmer 180 versendet das entsperrte Telegramm über die zehnte Datenleitung 250 an den neunten Slaveteilnehmer 175 zurück, und der neunte Slaveteilnehmer 175 sendet das entsperrte Telegramm über die zehnte Datenleitung 250 an den zweiten Ein-/Ausgangs-Port P1 des dritten Entsperrers 140. Der dritte Entsperrer 140 gibt das entsperrte Telegramm über den ersten Ein-/Ausgangs-Port P0 über die neunte Datenleitung 245 an den achten Slaveteilnehmer 170 aus, und der achte Slaveteilnehmer 170 versendet das entsperrte Telegramm über die neunte Datenleitung 245 an den zweiten Entsperrer 130. Der zweite Entsperrer 130 empfängt das entsperrte Telegramm über den dritten Ein-/Ausgangs-Port P2. Beispielsweise kann der zweite Entsperrer 130 derart eingestellt sein, dass wenn der zweite Entsperrer 130 ein entsperrtes Telegramm von einem vorausgehenden Entsperrer empfängt, beispielsweise dem dritten Entsperrer 140, das anhand der Telegramm-Kennung b nicht für das dem zweiten Entsperrer 130 zugeordnete erste Segment 300 bestimmt ist, der zweite Entsperrer 130 das entsperrte Telegramm sperrt, in dem der zweite Entsperrer 130 den zweiten Wert des Datenelements auf den ersten Wert setzt und dadurch eine mögliche Verarbeitung des entsperrten Telegramms auf dem Rückweg zu dem Masterteilnehmer 105 verhindert.

Der dritte Entsperrer 130 gibt das gesperrte Telegramm über den ersten Ein-/Ausgangs-Port P0 über die zweite Datenleitung 210 an den fünften Slaveteilnehmer 155 aus. Der fünfte Slaveteilnehmer 155 kann das gesperrte Telegramm nicht verarbeiten und versendet das gesperrte Telegramm über die zweite Datenleitung 210 an den ersten Entsperrer 120. Der erste Entsperrer 120 empfängt das gesperrte Telegramm auf dem zweiten Ein-/Ausgangs-Port P1 und kann beispielsweise ausgelegt sein, das gesperrte Telegramm mit der Telegramm-Kennung b zu entsperren, das heißt den ersten Wert des Datenelements auf den zweiten Wert des Datenelements zu setzen, bevor der erste Entsperrer 120 das Telegramm über den ersten Ein-/Ausgangs-Port P0 über die erste Datenleitung 205 an den Masterteilnehmer 105 ausgibt.

Die Beispiele zur Erläuterung des Telegrammverkehrs von dem Masterteilnehmer 105 zu den Slaveteilnehmern des ersten und zweiten Segments 300, 305 bzw. von den Slaveteilnehmern in den beiden Segmenten zurück zum Masterteilnehmer 105 sind exemplarisch gewählt worden und schränken den Telegrammverkehr nicht auf diese exemplarischen Beispiele ein. Die Erläuterung hätte gleichermaßen für den Telegrammverkehr vom Masterteilnehmer 105 zu einem anderen Segment des Automatisierungsnetzwerks 100 erfolgen können.

Ein EtherCAT Netzwerk umfasst in der Regel ein Datenleitungsnetz 200 mit Datenleitungen, die jeweils eine Hinleitung, die beispielsweise als TX-Leitung zum Versenden der Telegramme von dem Masterteilnehmer 105 an die Slaveteilnehmer ausgebildet ist, und eine Rückleitung aufweisen, die beispielsweise als RX-Leitung zum Empfang der Telegramme von dem Masterteilnehmer 105 ausgebildet ist (TX: Transmitter, RX: Receiver). Dies ist aus Übersichtlichkeitsgründen in Figur 1 nicht gezeigt. Ein Slaveteilnehmer in einem EtherCAT Netzwerk ist dazu ausgelegt, ein entsperrtes Telegramm auf der Hinleitung zu verarbeiten, also die an den Slaveteilnehmer adressierten Ausgangsdaten des entsperrten Telegramms zu lesen und die Eingangsdaten des Slaveteilnehmers in das entsperrte Telegramm zu legen. Das Zurücksenden der Telegramme erfolgt in dem EtherCAT Netzwerk über die Rückleitung, wobei die Slaveteilnehmer das entsperrte Telegramm über die Rückleitung nicht verarbeiten. Alternativ ist ebenfalls denkbar, dass eine Verarbeitung entsperrter Telegramme durch die Slaveteilnehmer auf dem Rückweg der Telegramme zu dem Masterteilnehmer erfolgen kann.

Beispielsweise kann der zweite Entsperrer 130 eingestellt sein, dass wenn der zweite Entsperrer 130 ein entsperrtes Telegramm mit der Telegramm-Kennung c über eine Hinleitung von einem vorausgehenden Entsperrer, zum Beispiel dem ersten Entsperrer 120, empfängt, der zweite Entsperrer 130 das entsperrte Telegramm mit der Telegramm-Kennung c über die Rückleitung an den Masterteilnehmer 105 zurücksendet. Dabei können die erste Datenleitung 205 und die zweite Datenleitung 210 jeweils eine Hinleitung und eine Rückleitung aufweisen und das entsperrte Telegramm beispielsweise von dem ersten Entsperrer 120 auf der Hinleitung verarbeiten worden sein. Eine Verarbeitung des entsperrten Telegramms auf der Rückleitung ist dann in einem EtherCAT Netzwerk nicht mehr vorgesehen. Jedoch kann in einem alternativ ausgestalteten Automatisierungsnetzwerk auch eine Verarbeitung eines entsperrten Telegramms auf der Rückleitung durch die Slaveteilnehmer möglich sein.

Die Voreinstellung des zweiten Entsperrers 130 kann beispielsweise mithilfe eines Konfigurationstelegramms erfolgt sein, das der Masterteilnehmer 105 an den zweiten Entsperrer 130 vor dem Versenden der Telegramme gesendet hat. Beispielsweise kann mit dem Konfigurationstelegramm in der Speichereinheit des zweiten Entsperrers 130 eingestellt werden, dass wenn der zweite Entsperrer 130 ein entsperrtes Telegramm mit einer bestimmten Telegramm-Kennung, zum Beispiel in Form des Symbols c, über die Hinleitung empfängt und das entsperrte Telegramm den zweiten Wert des Datenelements aufweist, der zweite Entsperrer 130 das entsperrte Telegramm über die Rückleitung an den Masterteilnehmer 105 zurücksendet. Auch kann mit dem Konfigurationstelegramm im Falle einer zur Verfügung stehenden Datenleitung für das Versenden und das Empfangen der Telegramme im zweiten Entsperrer 130 eingestellt werden, dass wenn der zweite Entsperrer 130 ein entsperrtes Telegramm mit einer bestimmten Telegramm-Kennung, zum Beispiel in Form des Symbols b, die nicht dem Segment das dem zweiten Entsperrer 130 zugeordnet ist, entspricht, also beispielsweise nicht dem ersten Segment 300 mit der Telegramm-Kennung a, sondern dem zweiten Segment 305 zugeordnet ist, und das entsperrte Telegramm den zweiten Wert des Datenelements aufweist, der zweite Entsperrer 130 den zweiten Wert des Datenelements auf den ersten Wert des Datenelements setzt, um das Telegramm für die Verarbeitung durch die Slaveteilnehmer zu sperren. Dies ist insbesondere denkbar, wenn eine Verarbeitung des Telegramms von den Slaveteilnehmern auf dem Rückweg des Telegramms zu dem Masterteilnehmer 105 nicht ausgeschlossen ist. Auf diese Weise kann also die Vertraulichkeit der Datenübertragung in dem Automatisierungsnetzwerk 100 erhöht werden.

Für die obige Erläuterung ist exemplarisch der zweite Entsperrer 130 gewählt worden. Dieser ist jedoch nicht auf die beschriebenen Merkmale eingeschränkt, sondern jeder Entsperrer des Automatisierungsnetzwerk 100 eignet sich gleichermaßen dafür.

Die einzelnen Ein-/Ausgangs-Ports der Entsperrer, auf denen die Entsperrer jeweils ein Telegramm von dem Masterteilnehmer 105 empfangen haben, können vom jeweiligen Entsperrer in der Speichereinheit des Entsperrers hinterlegt werden, um beim Zurücksenden der Telegramme von dem jeweiligen Entsperrer den dem Masterteilnehmer 105 zugeordneten ersten Ein-/Ausgangs-Port P0 des entsprechenden Entsperrers als den Ausgangs-Port zu nutzen.

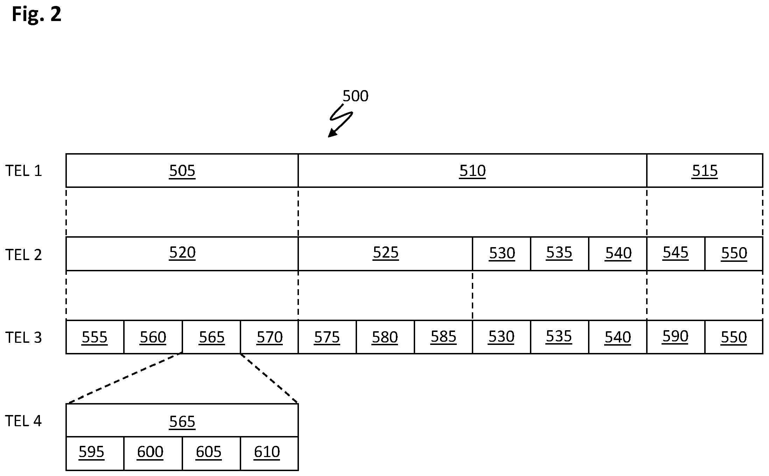

Figur 2 zeigt einen schematischen Aufbau einer Datenstruktur 500, die zu einer Verwendung in dem Verfahren zur Datenübertragung in dem in Figur 1 dargestellten Automatisierungsnetzwerk 100 dient. Die Datenstruktur 500 ist als Telegramm ausgebildet, das beispielsweise vom Masterteilnehmer 105 in Figur 1 an die Slaveteilnehmer in dem Automatisierungsnetzwerk 100 zur Verarbeitung für den Steuerungsbetrieb ausgegeben wird. Die Datenstruktur 500 in Figur 2 weist einen ersten Telegrammaufbau TEL1 auf und umfasst einen Kopfabschnitt 505, einen Datenabschnitt 510 sowie einen Endabschnitt 515. Beispielsweise kann die Datenstruktur 500 nach der IEEE-Norm 802.3 ausgebildet sein und das Ethernet Datenframe Format für eine paketorientierte Übertragung der Daten umfassen. Ist für die Datenstruktur 500 zusätzlich zur Einhaltung des Ethernet Datenframe Aufbaus das EtherCAT Datenübertragungsprotokoll für eine Verarbeitung von Nutzdaten der Datenstruktur 500 ausgelegt, so weist die Datenstruktur einen zweiten Telegrammaufbau TEL2 auf. Der Kopfabschnitt 505 der Datenstruktur 500 ist dann als Ethernet Kopfabschnitt 520 ausgebildet.

Der Datenabschnitt 510 der Datenstruktur 500 weist dann einen EtherCAT Kopfabschnitt 525 auf, der Instruktionen für die Slaveteilnehmer umfasst. Weiterhin umfasst der Datenabschnitt 510 EtherCAT Daten, die in Form von Datagrammen umgesetzt sein können. Beispielsweise kann der Datenabschnitt 510 ein erstes Datagramm 530, ein zweites Datagramm 535 sowie ein n-tes Datagramm 540 aufweisen, wobei das n-te Datagramm 540 anzeigt, dass die Datenstruktur 500 insgesamt eine beliebige Anzahl an Datagrammen umfassen kann. An dieser Stelle soll jedoch keine Einschränkung auf eine bestimmte Anzahl an Datagrammen in der Datenstruktur 500 vorgenommen werden. Die Datagramme selbst weisen jeweils ein Steuerdatenfeld und ein Nutzdatenfeld auf, was in Figur 2 nicht dargestellt ist. Das Steuerdatenfeld umfasst ein Befehlsfeld, welches dem Slaveteilnehmer Auskunft darüber gibt, auf welche Art der Slaveteilnehmer die Nutzdaten der als EtherCAT Telegramm ausgebildeten Datenstruktur 500 verarbeiten soll: Also beispielsweise, ob der Slaveteilnehmer Daten in einem Schreibvorgang in das Nutzdatenfeld des EtherCAT Telegramms einfügen soll, oder ob der Slaveteilnehmer zunächst Daten aus dem Nutzdatenfeld entnehmen und anschließend welche in das Nutzdatenfeld in einem Schreib-/Lesevorgang einfügen soll, bzw. ob der Slaveteilnehmer lediglich Daten aus dem Nutzdatenfeld in einem Lesevorgang entnehmen soll. Weiterhin weist das Steuerdatenfeld ein Adressfeld auf. Im Adressfeld ist der Datenbereich im Slaveteilnehmer festgelegt, mit dem der Slaveteilnehmer beim Durchlauf des Nutzdatenfelds Daten austauschen soll.

Nach dem Empfang des Steuerdatenfelds im Datagramm des EtherCAT-Telegramms beginnt der Slaveteilnehmer mit der Auswertung des Befehlsfelds und des Adressfelds. Ist der Slaveteilnehmer über das Datenelement für die Verarbeitung des EtherCAT Telegramms adressiert, so entnimmt der Slaveteilnehmer bei einem Lese- bzw. bei einem Schreib-/Lese-Datagramm die für ihn bestimmten Ausgangsdaten aus dem Nutzdatenfeld während das Datagramm im EtherCAT-Telegramm durch den Slaveteilnehmer hindurchläuft. Handelt es sich um ein Schreib- bzw. ein Schreib-/Lese-Datagramm, so fügt der entsprechende Slaveteilnehmer die Eingangsdaten im Durchlauf in das Nutzdatenfeld im Datagramm ein.

Der Endabschnitt 515 der als EtherCAT Telegramm ausgebildeten Datenstruktur 500, nachfolgend EtherCAT Telegramm genannt, weist überdies im zweiten Telegrammaufbau TEL2 ein Padding-Feld 545 sowie ein Prüfsummenfeld 550 auf. Das Padding-Feld 545 ist erforderlich, um das EtherCAT Telegramm in dem Ethernet Datenframe auf die notwendige Minimalgröße des Ethernet Datenframes von 64 Byte zu bringen, indem zusätzliche, als Pad angefügte Bytes in das EtherCAT Telegramm eingefügt werden. Das Padding-Feld kann erforderlich sein, wenn mit dem EtherCAT Telegramm als Nutzdaten beispielsweise weniger als 46 bzw. 42 Bytes (ohne bzw. mit einem der IEEE 802.1Q Norm entsprechenden VLAN-Tag) zu übertragen sind, wobei eine Präambel und ein Start Frame Delimiter (SFD) Feld, die in Figur 2 nicht enthalten sind, dabei nicht mitgezählt werden. Mithilfe des Prüfsummenfelds 550 kann eine Integritätsprüfung von versendeten Daten gewährleistet werden. Das Prüfsummenfeld 550 kann dazu beispielsweise eine berechnete CRC-Prüfsumme (CRC: Cyclic Redundancy Check) umfassen, die über den Ethernet Datenframe berechnet wird, beginnend mit einer Ziel-MAC-Adresse (MAC: Media Access Control) und endend mit dem Padding-Feld 545, sodass die Prüfsumme selbst nicht in der CRC-Prüfsumme enthalten ist. Die CRC-Prüfsumme wird vom Sender erstellt und an das Padding-Feld 545 angehängt. Der Empfänger führt nach dem Empfang des EtherCAT Telegramms die gleiche CRC-Prüfsummen-berechnung aus, und wenn die vom Empfänger berechnete CRC-Prüfsumme nicht mit der mit dem EtherCAT Telegramm übermittelten CRC-Prüfsumme übereinstimmt, so geht der Empfänger von einer fehlerhaften Datenübertragung aus. Das EtherCAT Telegramm kann in einem solchen Fall vom Empfänger verworfen werden.

Ein dritter Telegrammaufbau TEL3 in Figur 2 zeigt einen detaillierteren Aufbau des Ethernet Kopfabschnitts 520. Der Ethernet Kopfabschnitt 520 weist ein Zieladressfeld 555 auf, welches die oben genannte Ziel-MAC-Adresse umfasst, die den Netzwerkteilnehmer, der als Slaveteilnehmer, Entsperrer oder als Masterteilnehmer im Automatisierungsnetzwerk 100 nach Figur 1 ausgebildet sein kann, identifiziert, der das EtherCAT Telegramm empfangen soll. Die Ziel-MAC-Adresse kann dabei auch als Multicast-Adresse (Adressierung mehrerer Netzwerkteilnehmer im Automatisierungsnetzwerk 100) oder Broadcast-Adresse (Adressierung aller Netzwerkteilnehmer im Automatisierungsnetzwerk 100) ausgebildet sein. Nachfolgend an das Zieladressfeld 555 weist der Ethernet Kopfabschnitt 520 ein Absenderadressfeld 560 auf. Das Absenderadressfeld 560 umfasst eine Absenderadresse, die ebenfalls als MAC-Adresse ausgebildet ist und den Sender identifiziert. Das Zieladressfeld 555 und das Absenderadressfeld 560 umfassen dabei jeweils 6 Byte.

Ferner weist der Ethernet Kopfabschnitt 520 auf das Absenderadressfeld 560 folgend ein TAG-Feld 565 auf. Dieses kann beispielsweise gemäß der IEEE 802.1Q Norm als VLAN TAG-Feld ausgebildet sein (VLAN: Virtual Local Area Network) und 4 Bytes umfassen. Auf das TAG-Feld 565 folgend weist der Ethernet Kopfabschnitt 520 ein Protokollfeld 570 auf. Das Protokollfeld 570 kann als sogenanntes "Ethertype"-Feld ausgebildet sein und einen Wert umfassen, der ein verwendetes Protokoll einer nächsthöheren Schicht innerhalb von Nutzdaten angibt, wobei eine Schicht und eine nächsthöhere Schicht nach dem OSI-Modell (OSI: Open Systems Interconnection), also dem Referenzmodell für Datenübertragungsprotokolle in einer Schichtenarchitektur, definiert sind. Beispielsweise weist das Protokollfeld 570 den Wert 0x88A4 (im Hexadezimalsystem) auf, wenn das Telegramm als EtherCAT Telegramm ausgebildet ist, dieser Wert mit dem echtzeitfähigen EtherCAT Datenübertragungsprotokoll verknüpft ist.

Der EtherCAT Kopfabschnitt 525 umfasst ein Längenfeld 575. Das Längenfeld 575 gibt Auskunft über die Länge der EtherCAT Datagramme. Nachfolgend auf das Längenfeld 575 umfasst der EtherCAT Kopfabschnitt 525 ein Reservefeld 580 für einen Bedarfsfall. Anschließend an das Reservefeld 580 umfasst der EtherCAT Kopfabschnitt 525 ein Typfeld 585. Das Typfeld 585 weist das Datenelement mit dem ersten und dem zweiten Wert auf, wobei das Datenelement als EtherCAT Protokolltyp ausgebildet ist. Der EtherCAT Protokolltyp umfasst den zweiten Wert, wenn das mit der Telegramm-Kennung angesprochene Segment mit Slaveteilnehmern für die Verarbeitung adressiert ist. Der EtherCAT Protokolltyp weist dann den Wert 0x1 (im Hexadezimalsystem) auf und die Slaveteilnehmer in dem Segment erkennen an diesem Wert, dass das EtherCAT Telegramm für die Verarbeitung freigegeben ist und beginnen mit der Verarbeitung der Datagramme in dem EtherCAT Telegramm.

Der EtherCAT Protokolltyp weist den ersten Wert auf, der verschieden von dem zweiten Wert mit 0x1 (im Hexadezimalsystem) ausgebildet ist, zum Beispiel kann der erste Wert dem Wert 0x6 (im Hexadezimalsystem) entsprechen, wenn das EtherCAT Telegramm für die Verarbeitung durch die Slaveteilnehmer in dem jeweiligen Segment gesperrt ist. Die Telegramm-Kennung kann beispielsweise als MAC-Adresse des Zieladressfelds 555 ausgebildet sein. Ferner kann die Telegramm-Kennung bei Verwendung des TAG-Felds 565, das als VLAN TAG-Feld ausgelegt sein kann, auch als eine VLAN ID ausgebildet sein. Das VLAN TAG-Feld kann dabei 4 Bytes, also 32 Bits umfassen, wobei die ersten beiden Bytes den Wert 0x8100 umfassen, um den Ethernet Datenframe als einen tagged Ethernet Datenframe nach der IEEE 802.1Q Norm zu kennzeichnen. Die restlichen beiden Bytes umfassen die VLAN-ID, eine Fragmentierinformation, im Falle einer Fragmentierung des EtherCAT Telegramms, sowie eine Priorität, mit der das EtherCAT Telegramm gesendet werden kann, wobei die Priorität in Form eines Prioritäts-Werts ausgebildet sein kann. Auf die einzelnen Datagramme im dritten Telegrammaufbau TEL3 wird an dieser Stelle nicht erneut eingegangen, da diese gleich zu den Datagrammen des zweiten Telegrammaufbaus TEL2 ausgebildet sein können.

Der Endabschnitt 515 kann statt dem Padding-Feld 545 auch ein Fragmentierfeld 590 umfassen, wenn das EtherCAT Telegramm von einem Entsperrer, der beispielsweise als Netzwerkverteiler bzw. als ein sogenannter "Branch" ausgebildet ist, fragmentiert wird. Das Fragmentierfeld 590 kann den Wert Null umfassen und damit anzeigen, dass keine Fragmentierung des EtherCAT Telegramms stattgefunden hat. Die Bits Null bis drei des Fragmentierfelds 590 können eine Datenframezahl umfassen, die einen Wert angibt, mit dem der jeweilige Ethernet Datenframe gekennzeichnet wird, wobei mit den Bits Null bis drei die Werte von eins bis 15 darstellbar sind, wenn das EtherCAT Telegramm von einem Entsperrer fragmentiert worden ist. Die Bits 4 bis 7 des Fragmentierfelds 590 können als Reserve Bits vorgesehen sein.

Das TAG-Feld 565 kann auch gemäß einem vierten Telegrammaufbau TEL4 aufgebaut sein, wobei in Figur 2 auf eine Darstellung der im dritten Telegrammaufbau TEL3 gezeigten weiteren Felder des Ethernet Kopfabschnitts 520, sowie des EtherCAT Kopfabschnitts 525 und des Endabschnitts 515 nicht gezeigt sind. Gleichwohl kann der vierte Telegrammaufbau TEL4 als vollständiges EtherCAT Telegramm ausgebildet sein. Das TAG-Feld 565 kann nach dem vierten Telegrammaufbau TEL4 ein Protokollidentifikationsfeld 595 aufweisen. Beispielsweise kann das Protokollidentifikationsfeld 595 einen Wert aufweisen, der den Ethernet Datenframe als einen tagged Ethernet Datenframe nach der IEEE 802.1Q Norm kennzeichnet, aber verschieden von der Kennzeichnung des VLAN-Tags mit dem Wert 0x8100 (im Hexadezimalsystem) ausgebildet ist.

Nachfolgend auf das Protokollidentifikationsfeld 595 kann das TAG-Feld 565 ein erstes Datenfeld 600 umfassen. Überdies kann das TAG-Feld 565 zwischen dem ersten Datenfeld 600 und einem dritten Datenfeld 610 ein zweites Datenfeld 605 aufweisen. Das erste Datenfeld 600 und das zweite Datenfeld 605 können ebenfalls die Telegramm-Kennung der EtherCAT Telegramme umfassen, die die EtherCAT Telegramme den einzelnen Segmenten des in Figur 1 dargestellten Automatisierungsnetzwerks 100 zuordnen. In diesem Zusammenhang kann die Telegramm-Kennung für ein EtherCAT Telegramm beispielsweise eine Zielsegmentadresse umfassen, sowie eine Absendersegmentadresse, wobei das erste Datenfeld 600 die Zielsegmentadresse und das zweite Datenfeld 605 die Absendersegmentadresse aufweisen kann. Das dritte Datenfeld 610 kann einen nicht belegten Bereich umfassen, beispielsweise können Bit Null bis Bit 11 des dritten Datenfelds 605 als Reserve-Bits dienen. Ferner kann das dritte Datenfeld 610 die Fragmentierinformation, wie oben im Zusammenhang mit dem VLAN-Tag erläutert wurde, im Falle der Fragmentierung des EtherCAT Telegramms, und die Priorität, mit der das EtherCAT Telegramm gesendet werden kann, umfassen.

Darüber hinaus kann das EtherCAT Telegramm auch in einen UDP/IP (UDP: User Datagram Protocol, IP: Internet Protocol) Datenframe Aufbau eingebettet sein, was in Figur 2 jedoch nicht dargestellt ist. In dem Fall weist der Ethernet Kopfabschnitt 520 das Zieladressfeld 555 sowie das Absenderadressfeld 560 auf. Nachfolgend auf das Absenderadressfeld 560 umfasst der Ethernet Kopfabschnitt 520 das Protokollfeld 570 auf, wobei das Protokollfeld 570 den Wert 0x0800 (im Hexadezimalsystem) aufweist, der das Internetprotokoll (IPv4, Internet Protocol Version 4) angibt. Auf das Protokollfeld 570 folgen im Ethernet Kopfabschnitt 520 ein IP Kopfabschnitt sowie ein UDP Kopfabschnitt. Der EtherCAT Kopfabschnitt 525, die Datagramme und der Endabschnitt 515 können in dem Fall analog zur obigen Erläuterung ausgebildet sein, wobei der Endabschnitt 515 das Padding-Feld 545 sowie Das Prüfsummenfeld 550 umfassen kann. Des Weiteren kann das EtherCAT Telegramm zusätzlich zur Einbettung in den UDP/IP Datenframe Aufbau noch das TAG-Feld 565 aufweisen, wobei das TAG-Feld 565 hierbei als VLAN-Tag ausgebildet sein kann. Das TAG-Feld 565 ist dann analog zum dritten Telegrammaufbau TEL3 angeordnet.

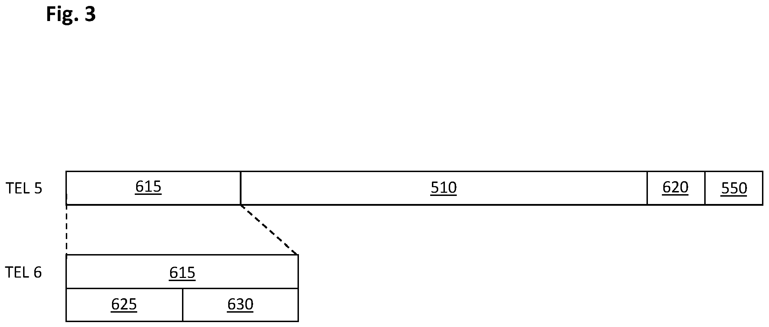

Figur 3 zeigt einen schematischen fünften und sechsten Telegrammaufbau TEL5, TEL6 für die Datenstruktur 500 in Figur 2, die als EtherCAT Telegramm ausgebildet sein kann. Insbesondere kann das EtherCAT Telegramm den fünften Telegrammaufbau TEL5 und den sechsten Telegrammaufbau TEL6 aufweisen, wenn das EtherCAT Telegramm von einem Entsperrer in dem in Figur 1 dargestellten Automatisierungsnetzwerk 100 fragmentiert worden ist und ein erstes Fragment des fragmentierten EtherCAT Telegramms beispielsweise den dritten und vierten Telegrammaufbau TEL3, TEL4 aufweist. Ein zweites bis n-tes Fragment des EtherCAT Telegramms kann hierbei den fünften und sechsten Telegrammaufbau TEL5, TEL6 umfassen. Das EtherCAT Telegramm weist ein Fragment-Zieladressfeld 615 auf, wobei das Fragment-Zieladressfeld 615 gemäß dem sechsten Telegrammaufbau TEL6 ein fünftes Datenfeld 625 und ein sechstes Datenfeld 630 umfasst. Beispielsweise kann das fünfte Datenfeld 625 des Fragment-Zieladressfeldes 615 4 Bytes umfassen und in Form eines Multicast-Adressraumes ausgebildet sein, wobei der Multicast-Adressraum Multicast-Adressen aufweist, die zur Adressierung mehrerer Segmente mit Slaveteilnehmern in dem in Figur 1 dargestellten Automatisierungsnetzwerk 100 dienen. Alternativ dazu kann der Multicast-Adressraum in Form eines Unicast-Adressraumes ausgebildet sein, wobei der Unicast-Adressraum Unicast-Adressen aufweist, die zur Adressierung eines einzelnen Segments mit Slaveteilnehmern in Figur 1 dient. Ferner kann der Multicast-Adressraum auch als Broadcast-Adressraum ausgebildet sein, wobei der Broadcast-Adressraum Broadcast-Adressen umfasst, die zur Adressierung aller Segmente mit Slaveteilnehmern in Figur 1 dienen.

Das sechste Datenfeld 630 des Fragment-Zieladressfeldes 615 kann 2 Bytes umfassen. Die Bits Null bis drei des sechsten Datenfelds 630 können die Datenframezahl umfassen, die den Wert des jeweiligen Ethernet Datenframe angeben kann. Die Bits 4 bis 7, sowie das Bit 12 können weiterhin als Reserve-Bits vorgesehen sein und keine Belegung aufweisen. Die Bits 8 bis 11 können eine Fragmentzahl umfassen, die einen Wert des jeweiligen Fragments angibt, um die einzelnen Fragmente dem zugeordneten Ethernet Datenframe zuordnen zu können. Ferner können die Bits 13 bis 15 die Priorität aufweisen, mit der das zweite bis n-te Fragment des EtherCAT Telegramms gesendet werden kann, wobei die Priorität in Form eines Prioritäts-Werts ausgebildet sein kann. Der Datenabschnitt 510 im fünften Telegrammaufbau TEL5 ist exemplarisch gewählt worden und kann gemäß des zweiten und dritten Telegrammaufbaus TEL2, TEL3 in Figur 2 ausgebildet sein. Auf den Datenabschnitt 510 folgend kann das zweite bis n-te Fragment des EtherCAT Telegramms ein viertes Datenfeld 620 umfassen, das ein Byte aufweisen kann. Dabei können die Bits 0 bis 3 des vierten Datenfelds 620 dafür vorgesehen sein, anzuzeigen, ob ein weiteres Fragment folgt, oder ob das zu übertragende Fragment bereits das letzte Fragment des EtherCAT Telegramms bildet. Beispielsweise kann hierbei mit dem Wert Null angezeigt werden, dass sich das zu übertragende Fragment um das letzte Fragment des EtherCAT Telegramms handelt. Weiterhin können die Bits 4 bis 6 als Reserve-Bits und das Bit 7 dafür vorgesehen sein, im Falle eines Unterschreitens der Mindestlänge ein Auffüllen des zweiten bis n-ten Fragments des EtherCAT Telegramms mit Füllbytes, das heißt einem Padding anzuzeigen. Ferner kann das zweite Byte des vierten Datenfelds 620 die Datenframezahl anzeigen, die den Wert des jeweiligen Ethernet Datenframe angeben kann. Abschließend kann das zweite bis n-te Fragment des EtherCAT Telegramms gemäß dem fünften Telegrammaufbau TEL5 das Prüfsummenfeld 550 mit der über das zweite bis n-te Fragment berechneten Prüfsumme, die analog zu obiger Erläuterung ausgebildet sein kann, umfassen. Da das vierte Datenfeld 620 und das Prüfsummenfeld 550 zusammen 5 Bytes umfassen, kann das Fragment-Zieladressfeld 615 sowie der Datenabschnitt 510 des zweiten bis n-ten Fragments des EtherCAT Telegramms zusammen wenigstens 59 Bytes aufweisen, ohne dass für das zweite bis n-te Fragment des EtherCAT Telegramms ein Padding erforderlich ist, um die Mindestlänge von 64 Bytes zu erreichen.

Die Struktur des EtherCAT Telegramms muss überdies nicht zwingend die Reihenfolge der Slaveteilnehmer in den Segmenten beinhalten, da die EtherCAT Telegramme einerseits physikalische Speicheradressen, nachfolgend physikalischer Adressbereich genannt, der Slaveteilnehmer in den Segmenten adressieren können und andererseits können die EtherCAT Telegramme auch als logische Telegramme ausgebildet sein. Im zweitgenannten Fall kann dazu im EtherCAT Telegramm eine logische Adresse, also ein logischer Adressbereich angegeben werden und eine Länge des Adressbereichs. Insbesondere kann ein logischer Adressbereich größer als ein physikalischer Adressbereich ausgebildet sein, sodass der physikalische Adressbereich in den logischen Adressbereich gelegt werden kann. Ferner kann der logische Adressbereich im EtherCAT Telegramm hintereinander gelegt werden.

Die Erfindung wurde im Detail durch bevorzugte Ausführungsbeispiele beschrieben. Anstelle der beschriebenen Ausführungsbeispiele sind weitere Ausführungsbeispiele denkbar, welche weitere Abwandlungen oder Kombinationen von beschriebenen Merkmalen aufweisen können. Die Erfindung ist aus diesem Grund nicht durch die offenbarten Beispiele eingeschränkt, da vom Fachmann andere Variationen daraus abgeleitet werden können, ohne dabei den Schutzumfang der Erfindung zu verlassen.

## Patentansprüche

1. Verfahren zur Datenübertragung in einem Automatisierungsnetzwerk mithilfe von Telegrammen,
wobei das Automatisierungsnetzwerk (100) einen Masterteilnehmer (105) und Slaveteilnehmer (115, 125, 135, 145, 155, 160, 165, 170, 175, 180, 185) umfasst, die über ein Datenleitungsnetz (200) miteinander verbunden sind,
**dadurch gekennzeichnet, dass** das Automatisierungsnetzwerk (100) wenigstens einen Entsperrer (120, 130, 140) umfasst, der mit dem Masterteilnehmer (105) und den Slaveteilnehmern (115, 125, 135, 145, 155, 160, 165, 170, 175, 180, 185) über das Datenleitungsnetz (200) miteinander verbunden ist,
wobei die Slaveteilnehmer (115, 125, 135, 145, 155, 160, 165, 170, 175, 180, 185) in Segmente (300, 305, 310, 315, 320, 325) unterteilt sind, wobei jedes Segment (300, 305, 310, 315, 320, 325) zumindest einen Slaveteilnehmer (115, 125, 135, 145, 155, 160, 165, 170, 175, 180, 185) umfasst, wobei der Masterteilnehmer (105) für eine Verarbeitung durch die Slaveteilnehmer (115, 125, 135, 145, 155, 160, 165, 170, 175, 180, 185) gesperrte Telegramme versendet, die jeweils eine Telegramm-Kennung aufweisen, um ein gesperrtes Telegramm einem Segment (300, 305, 310, 315, 320, 325) zuzuordnen, wobei dem wenigstens einen Entsperrer (120, 130, 140) wenigstens ein Segment (300, 305, 310, 315, 320, 325) zugeordnet ist,
wobei, wenn der wenigstens eine Entsperrer (120, 130, 140) ein gesperrtes Telegramm empfängt, der wenigstens eine Entsperrer (120, 130, 140) anhand der Telegramm-Kennung in dem gesperrten Telegramm prüft, ob das gesperrte Telegramm für das dem wenigstens einen Entsperrer (120, 130, 140) zugeordnete Segment (300, 305, 310, 315, 320, 325) bestimmt ist, um das gesperrte Telegramm als entsperrtes Telegramm für die Verarbeitung durch die Slaveteilnehmer (115, 125, 135, 145, 155, 160, 165, 170, 175, 180, 185) freizugeben, sofern das gesperrte Telegramm für das dem wenigstens einen Entsperrer (120, 130, 140) zugeordnete Segment (300, 305, 310, 315, 320, 325) bestimmt ist.

2. Verfahren nach Anspruch 1,
wobei die Telegramme jeweils ein Datenfeld mit einem Datenelement aufweisen, wobei, wenn die Telegramme gesperrt sind, das Datenelement einen ersten Wert umfasst,
wobei, wenn die Telegramme entsperrt sind, das Datenelement einen zweiten Wert aufweist, und
wobei der wenigstens eine Entsperrer (120, 130, 140) beim Entsperren eines gesperrten Telegramms den ersten Wert des Datenelements auf den zweiten Wert des Datenelements setzt, um den Slaveteilnehmern (115, 125, 135, 145, 155, 160, 165, 170, 175, 180, 185) eine Freigabe der Verarbeitung des Telegramms anzuzeigen.

3. Verfahren nach Anspruch 1 oder 2,
wobei der Masterteilnehmer (105) vor dem Versenden der Telegramme ein Konfigurationstelegramm an den wenigstens einen Entsperrer (120, 130, 140) versendet, das dem wenigstens einen Entsperrer (120, 130, 140) die Telegramm-Kennung des Segments (300, 305, 310, 315, 320, 325) anzeigt, das dem wenigstens einen Entsperrer (120, 130, 140) zugeordnet ist.

4. Verfahren nach einem der Ansprüche 1 bis 3,
wobei das Datenleitungsnetz (200) Datenverbindungen (205, 210, 215, 220, 225, 230, 235, 240, 245, 250, 255, 260) zwischen dem Masterteilnehmer (105), den Slaveteilnehmern (115, 125, 135, 145, 155, 160, 165, 170, 175, 180, 185) und mehreren Entsperrern (120, 130, 140) umfasst,
wobei, wenn ein Entsperrer (120, 130, 140) ein entsperrtes Telegramm von einem vorausgehenden Entsperrer (120, 130, 140) über eine Datenverbindung (205, 210, 215, 220, 225, 230, 235, 240, 245, 250, 255, 260) empfängt, das nicht für das dem Entsperrer (120, 130, 140) zugeordnete Segment (300, 305, 310, 315, 320, 325) bestimmt ist, der Entsperrer (120, 130, 140) das Telegramm sperrt.

5. Verfahren nach einem der Ansprüche 1 bis 3,
wobei das Datenleitungsnetz (200) Datenverbindungen (205, 210, 215, 220, 225, 230, 235, 240, 245, 250, 255, 260) zwischen dem Masterteilnehmer (105), den Slaveteilnehmern (115, 125, 135, 145, 155, 160, 165, 170, 175, 180, 185) und mehreren Entsperrern (120, 130, 140) umfasst, wobei die Datenverbindungen (205, 210, 215, 220, 225, 230, 235, 240, 245, 250, 255, 260) jeweils eine Hinleitung und eine Rückleitung aufweisen, wobei die Slaveteilnehmer (115, 125, 135, 145, 155, 160, 165, 170, 175, 180, 185) die Telegramme jeweils auf der Hinleitung der Datenverbindung (205, 210, 215, 220, 225, 230, 235, 240, 245, 250, 255, 260) verarbeiten,
wobei, wenn ein Entsperrer (120, 130, 140) über eine Hinleitung einer Datenverbindung (205, 210, 215, 220, 225, 230, 235, 240, 245, 250, 255, 260) ein entsperrtes Telegramm von einem vorausgehenden Entsperrer (120, 130, 140) empfängt, der Entsperrer (120, 130, 140) das entsperrte Telegramm über eine Rückleitung der Datenverbindung (205, 210, 215, 220, 225, 230, 235, 240, 245, 250, 255, 260) an den Masterteilnehmer (105) versendet.

6. Verfahren nach einem der Ansprüche 1 bis 5,
wobei der wenigstens eine Entsperrer (120, 130, 140) als Netzwerkverteiler ausgebildet ist und mehrere Ein-/Ausgangs-Ports (P0, P1, P2, P3, P4) aufweist, an denen Segmente (300, 305, 310, 315, 320, 325) mit Slaveteilnehmern (115, 125, 135, 145, 155, 160, 165, 170, 175, 180, 185) angeschlossen sind,
wobei der als Netzwerkverteiler ausgebildete wenigstens eine Entsperrer (120, 130, 140) die Telegramm-Kennung für ein Routing des Telegramms über die mehreren Ein-/Ausgangs-Ports (P0, P1, P2, P3, P4) des als Netzwerkverteilers ausgebildeten wenigstens einen Entsperrers (120, 130, 140) verwendet, und
wobei der wenigstens eine Entsperrer (120, 130, 140) zusätzlich als Slaveteilnehmer (115, 125, 135, 145, 155, 160, 165, 170, 175, 180, 185) ausgelegt ist, um das Telegramm auch zu verarbeiten.

7. Telegramm, das in dem Verfahren nach einem der Ansprüche 2 bis 6 verwendet wird,
wobe das Telegramm einen Kopfabschnitt (505), einen Datenabschnitt (510) und einen Endabschnitt (515) aufweist, wobei der Kopfabschnitt (505) die Telegramm-Kennung umfasst,
wobei der Datenabschnitt (510) das Datenfeld mit dem Datenelement aufweist, wobei, wenn das Telegramm gesperrt ist, das Datenelement den ersten Wert umfasst, wobei, wenn das Telegramm entsperrt ist, das Datenelement den zweiten Wert umfasst, und
wobei der Endabschnitt (515) ein Prüfsummenfeld (550) für eine Integritätsprüfung von versendeten Daten umfasst.

8. Telegramm nach Anspruch 7,
wobei das Telegramm als Ethernet Telegramm ausgebildet ist, das im Kopfabschnitt (520) ein Zieladressfeld (555) und ein Absenderadressfeld (560) aufweist,
wobei das Zieladressfeld (555) und das Absenderadressfeld (560) jeweils als MAC-Adressenfeld ausgebildet sind,
wobei der Kopfabschnitt (520) ein TAG-Feld (565) umfasst, das die Telegramm-Kennung aufweist, und
wobei der Kopfabschnitt (520) ein Protokollfeld (570) für ein verwendetes Protokoll aufweist.

9. Telegramm nach Anspruch 7 oder 8,
wobei das Telegramm als EtherCAT Telegramm ausgebildet ist,
wobei der Datenabschnitt (510) einen weiteren Kopfabschnitt (525) umfasst,
wobei der weitere Kopfabschnitt (525) ein Längenfeld (575), ein Reservefeld (580) und das Datenfeld aufweist,
wobei das Datenfeld als Typfeld (585) und das Datenelement als EtherCAT Protokolltyp ausgebildet sind.

10. Automatisierungsnetzwerk,
wobei das Automatisierungsnetzwerk (100) einen Masterteilnehmer (105) und Slaveteilnehmer (115, 125, 135, 145, 155, 160, 165, 170, 175, 180, 185) umfasst, die über ein Datenleitungsnetz (200) miteinander verbunden sind,
**dadurch gekennzeichnet, dass** das Automatisierungsnetzwerk (100) wenigstens einen Entsperrer (120, 130, 140) umfasst, der mit dem Masterteilnehmer (105) und den Slaveteilnehmern (115, 125, 135, 145, 155, 160, 165, 170, 175, 180, 185) über das Datenleitungsnetz (200) miteinander verbunden ist,
wobei die Slaveteilnehmer (115, 125, 135, 145, 155, 160, 165, 170, 175, 180, 185) in Segmente (300, 305, 310, 315, 320, 325) unterteilt sind, wobei jedes Segment (300, 305, 310, 315, 320, 325) zumindest einen Slaveteilnehmer umfasst (115, 125, 135, 145, 155, 160, 165, 170, 175, 180, 185),wobei der Masterteilnehmer (105) ausgebildet ist, für eine Verarbeitung durch die Slaveteilnehmer (115, 125, 135, 145, 155, 160, 165, 170, 175, 180, 185) gesperrte Telegramme zu versenden, die jeweils eine Telegramm-Kennung aufweisen, um ein gesperrtes Telegramm einem Segment (300, 305, 310, 315, 320, 325) zuzuordnen,
wobei dem wenigstens einen Entsperrer (120, 130, 140) wenigstens ein Segment (300, 305, 310, 315, 320, 325) zugeordnet ist,
wobei der wenigstens eine Entsperrer (120, 130, 140) ausgebildet ist, wenn der wenigstens eine Entsperrer (120, 130, 140) ein gesperrtes Telegramm empfängt, anhand der Telegramm-Kennung in dem gesperrten Telegramm zu prüfen, ob das gesperrte Telegramm für das dem wenigstens einen Entsperrer (120, 130, 140) zugeordnete Segment (300, 305, 310, 315, 320, 325) bestimmt ist, um das gesperrte Telegramm als entsperrtes Telegramm für die Verarbeitung durch die Slaveteilnehmer (115, 125, 135, 145, 155, 160, 165, 170, 175, 180, 185) freizugeben, sofern das gesperrte Telegramm für das dem wenigstens einen Entsperrer (120, 130, 140) zugeordnete Segment (300, 305, 310, 315, 320, 325) bestimmt ist.

11. Automatisierungsnetzwerk nach Anspruch 10,
wobei der Masterteilnehmer (105) ausgelegt ist, Telegramme an die Slaveteilnehmer (115, 125, 135, 145, 155, 160, 165, 170, 175, 180, 185) zu versenden,
wobei ein vom Masterteilnehmer (105) versendetes Telegramm ein Datenfeld mit einem Datenelement aufweist,
wobei der Masterteilnehmer (105) ausgelegt ist, das Telegramm zu sperren, indem der Masterteilnehmer (105) das Datenelement des Telegramms auf einen ersten Wert setzt, und
wobei der wenigstens eine Entsperrer (120, 130, 140) ausgebildet ist, beim Entsperren eines gesperrten Telegramms, den ersten Wert des Datenelements auf einen zweiten Wert des Datenelements zu setzen, um den Slaveteilnehmern (115, 125, 135, 145, 155, 160, 165, 170, 175, 180, 185) eine Freigabe der Verarbeitung des Telegramms anzuzeigen.

12. Automatisierungsnetzwerk nach einem der Ansprüche 10 bis 11,
wobei das Datenleitungsnetz (200) Datenverbindungen (205, 210, 215, 220, 225, 230, 235, 240, 245, 250, 255, 260) zwischen dem Masterteilnehmer (105), den Slaveteilnehmern (115, 125, 135, 145, 155, 160, 165, 170, 175, 180, 185) und mehreren Entsperrern (120, 130, 140) umfasst,
wobei ein Entsperrer (120, 130, 140) ausgelegt ist, wenn der Entsperrer (120, 130, 140) ein entsperrtes Telegramm von einem vorausgehenden Entsperrer (120, 130, 140) über eine Datenverbindung (205, 210, 215, 220, 225, 230, 235, 240, 245, 250, 255, 260) empfängt, das nicht für das dem Entsperrer (120, 130, 140) zugeordnete Segment (300, 305, 310, 315, 320, 325) bestimmt ist, das Telegramm zu sperren.

13. Automatisierungsnetzwerk nach einem der Ansprüche 10 bis 11,
wobei das Datenleitungsnetz (200) Datenverbindungen (205, 210, 215, 220, 225, 230, 235, 240, 245, 250, 255, 260) zwischen dem Masterteilnehmer (105), den Slaveteilnehmern (115, 125, 135, 145, 155, 160, 165, 170, 175, 180, 185) und mehreren Entsperrern (120, 130, 140) umfasst, wobei die Datenverbindungen (205, 210, 215, 220, 225, 230, 235, 240, 245, 250, 255, 260) jeweils eine Hinleitung und eine Rückleitung aufweisen, wobei die Slaveteilnehmer (115, 125, 135, 145, 155, 160, 165, 170, 175, 180, 185) ausgelegt sind, die Telegramme jeweils auf der Hinleitung der Datenverbindung (205, 210, 215, 220, 225, 230, 235, 240, 245, 250, 255, 260) zu verarbeiten,
wobei ein Entsperrer (120, 130, 140) ausgebildet ist, wenn der Entsperrer (120, 130, 140) über eine Hinleitung einer Datenverbindung (205, 210, 215, 220, 225, 230, 235, 240, 245, 250, 255, 260) ein entsperrtes Telegramm empfängt, das entsperrte Telegramm über eine Rückleitung der Datenverbindung (205, 210, 215, 220, 225, 230, 235, 240, 245, 250, 255, 260) an den Masterteilnehmer (105) zu versenden.

14. Automatisierungsnetzwerk nach einem der Ansprüche 10 bis 13,
wobei der wenigstens eine Entsperrer (120, 130, 140) als Netzwerkverteiler ausgebildet ist und ausgelegt ist, mehrere Ein-/Ausgangs-Ports P1, P2, P3, P4) aufzuweisen, an denen Segmente (300, 305, 310, 315, 320, 325) mit Slaveteilnehmern (115, 125, 135, 145, 155, 160, 165, 170, 175, 180, 185) angeschlossen sind,
wobei der als Netzwerkverteiler ausgebildete wenigstens eine Entsperrer (120, 130, 140) ausgebildet ist, die Telegramm-Kennung für ein Routing des Telegramms über die mehreren Ein-/Ausgangs-Ports P1, P2, P3, P4) des als Netzwerkverteilers ausgebildeten wenigstens einen Entsperrers (120, 130, 140) zu verwenden, und
wobei der wenigstens eine Entsperrer (120, 130, 140) zusätzlich als Slaveteilnehmer (115, 125, 135, 145, 155, 160, 165, 170, 175, 180, 185) ausgelegt ist, um das Telegramm auch zu verarbeiten.

15. Entsperrer für ein Automatisierungsnetzwerk (100) nach einem der Ansprüche 10 bis 14, wobei der Entsperrer (120, 130, 140) ausgelegt ist, ein Verfahren zur Datenübertragung nach einem der Ansprüche 1 bis 6 auszuführen, und ein Telegramm nach einem der Ansprüche 7 bis 9 in dem Verfahren zu verwenden.

## Claims

1. Method for transmitting data in an automation network with the aid of telegrams,
wherein the automation network (100) comprises a master subscriber (105) and slave subscribers (115, 125, 135, 145, 155, 160, 165, 170, 175, 180, 185) which are connected to one another via a data line network (200), **characterized in that** the automation network (100) comprises at least one unlocker (120, 130, 140) which is connected to the master subscriber (105) and to the slave subscribers (115, 125, 135, 145, 155, 160, 165, 170, 175, 180, 185) via the data line network (200),
wherein the slave subscribers (115, 125, 135, 145, 155, 160, 165, 170, 175, 180, 185) are divided into segments (300, 305, 310, 315, 320, 325), wherein each segment (300, 305, 310, 315, 320, 325) comprises at least one slave subscriber (115, 125, 135, 145, 155, 160, 165, 170, 175, 180, 185), wherein the master subscriber (105) transmits locked telegrams each having a telegram identifier for processing by the slave subscribers (115, 125, 135, 145, 155, 160, 165, 170, 175, 180, 185) in order to assign a locked telegram to a segment (300, 305, 310, 315, 320, 325),
wherein at least one segment (300, 305, 310, 315, 320, 325) is assigned to the at least one unlocker (120, 130, 140),
wherein, if the at least one unlocker (120, 130, 140) receives a locked telegram, the at least one unlocker (120, 130, 140) checks, on the basis of the telegram identifier in the locked telegram, whether the locked telegram is intended for the segment (300, 305, 310, 315, 320, 325) assigned to the at least one unlocker (120, 130, 140) in order to release the locked telegram as an unlocked telegram for processing by the slave subscribers (115, 125, 135, 145, 155, 160, 165, 170, 175, 180, 185) provided that the locked telegram is intended for the segment (300, 305, 310, 315, 320, 325) assigned to the at least one unlocker (120, 130, 140).

2. Method according to Claim 1,
wherein the telegrams each have a data field with a data element,
wherein the data element comprises a first value if the telegrams are locked,
wherein the data element has a second value if the telegrams are unlocked, and
wherein the at least one unlocker (120, 130, 140) sets the first value of the data element to the second value of the data element when unlocking a locked telegram in order to indicate to the slave subscribers (115, 125, 135, 145, 155, 160, 165, 170, 175, 180, 185) that the processing of the telegram has been enabled.

3. Method according to Claim 1 or 2,
wherein, before transmitting the telegrams, the master subscriber (105) transmits a configuration telegram to the at least one unlocker (120, 130, 140), which configuration telegram indicates, to the at least one unlocker (120, 130, 140), the telegram identifier of the segment (300, 305, 310, 315, 320, 325) assigned to the at least one unlocker (120, 130, 140).

4. Method according to one of Claims 1 to 3,
wherein the data line network (200) comprises data connections (205, 210, 215, 220, 225, 230, 235, 240, 245, 250, 255, 260) between the master subscriber (105), the slave subscribers (115, 125, 135, 145, 155, 160, 165, 170, 175, 180, 185) and the plurality of unlockers (120, 130, 140),
wherein, if an unlocker (120, 130, 140) receives an unlocked telegram, which is not intended for the segment (300, 305, 310, 315, 320, 325) assigned to the unlocker (120, 130, 140), from a preceding unlocker (120, 130, 140) via a data connection (205, 210, 215, 220, 225, 230, 235, 240, 245, 250, 255, 260), the unlocker (120, 130, 140) locks the telegram.

5. Method according to one of Claims 1 to 3,
wherein the data line network (200) comprises data connections (205, 210, 215, 220, 225, 230, 235, 240, 245, 250, 255, 260) between the master subscriber (105), the slave subscribers (115, 125, 135, 145, 155, 160, 165, 170, 175, 180, 185) and the plurality of unlockers (120, 130, 140), wherein the data connections (205, 210, 215, 220, 225, 230, 235, 240, 245, 250, 255, 260) each have a forward line and a return line,
wherein the slave subscribers (115, 125, 135, 145, 155, 160, 165, 170, 175, 180, 185) respectively process the telegrams on the forward line of the data connection (205, 210, 215, 220, 225, 230, 235, 240, 245, 250, 255, 260),
wherein, if an unlocker (120, 130, 140) receives an unlocked telegram from a preceding unlocker (120, 130, 140) via a forward line of a data connection (205, 210, 215, 220, 225, 230, 235, 240, 245, 250, 255, 260), the unlocker (120, 130, 140) transmits the unlocked telegram to the master subscriber (105) via a return line of the data connection (205, 210, 215, 220, 225, 230, 235, 240, 245, 250, 255, 260).

6. Method according to one of Claims 1 to 5,
wherein the at least one unlocker (120, 130, 140) is in the form of a network distributor and has a plurality of input/output ports (P0, P1, P2, P3, P4), to which segments (300, 305, 310, 315, 320, 325) containing slave subscribers (115, 125, 135, 145, 155, 160, 165, 170, 175, 180, 185) are connected,
wherein the at least one unlocker (120, 130, 140) in the form of a network distributor uses the telegram identifier to route the telegram via the plurality of input/output ports (P0, P1, P2, P3, P4) of the at least one unlocker (120, 130, 140) in the form of a network distributor, and
wherein the at least one unlocker (120, 130, 140) is additionally in the form of a slave subscriber (115, 125, 135, 145, 155, 160, 165, 170, 175, 180, 185) in order to also process the telegram.

7. Telegram which is used in the method according to one of Claims 2 to 6,
wherein the telegram has a header section (505), a data section (510) and an end section (515),
wherein the header section (505) comprises the telegram identifier,
wherein the data section (510) has the data field containing the data element,
wherein the data element comprises the first value if the telegram is locked,
wherein the data element comprises the second value if the telegram is unlocked, and
wherein the end section (515) comprises a checksum field (550) for an integrity test of transmitted data.

8. Telegram according to Claim 7,
wherein the telegram is in the form of an Ethernet telegram having a destination address field (555) and a sender address field (560) in the header section (520), wherein the destination address field (555) and the sender address field (560) are each in the form of a MAC address field,
wherein the header section (520) comprises a tag field (565) which has the telegram identifier, and
wherein the header section (520) has a protocol field (570) for a protocol that is used.

9. Telegram according to Claim 7 or 8,
wherein the telegram is in the form of an EtherCAT telegram,
wherein the data section (510) comprises a further header section (525),
wherein the further header section (525) has a length field (575), a reserve field (580) and the data field, wherein the data field is in the form of a type field (585) and the data element is in the form of an EtherCAT protocol type.

10. Automation network,
wherein the automation network (100) comprises a master subscriber (105) and slave subscribers (115, 125, 135, 145, 155, 160, 165, 170, 175, 180, 185) which are connected to one another via a data line network (200), **characterized in that** the automation network (100) comprises at least one unlocker (120, 130, 140) which is connected to the master subscriber (105) and to the slave subscribers (115, 125, 135, 145, 155, 160, 165, 170, 175, 180, 185) via the data line network (200),
wherein the slave subscribers (115, 125, 135, 145, 155, 160, 165, 170, 175, 180, 185) are divided into segments (300, 305, 310, 315, 320, 325), wherein each segment (300, 305, 310, 315, 320, 325) comprises at least one slave subscriber (115, 125, 135, 145, 155, 160, 165, 170, 175, 180, 185), wherein the master subscriber (105) is designed to transmit locked telegrams each having a telegram identifier for processing by the slave subscribers (115, 125, 135, 145, 155, 160, 165, 170, 175, 180, 185) in order to assign a locked telegram to a segment (300, 305, 310, 315, 320, 325),
wherein at least one segment (300, 305, 310, 315, 320, 325) is assigned to the at least one unlocker (120, 130, 140),
wherein, if the at least one unlocker (120, 130, 140) receives a locked telegram, the at least one unlocker (120, 130, 140) is designed to check, on the basis of the telegram identifier in the locked telegram, whether the locked telegram is intended for the segment (300, 305, 310, 315, 320, 325) assigned to the at least one unlocker (120, 130, 140) in order to release the locked telegram as an unlocked telegram for processing by the slave subscribers (115, 125, 135, 145, 155, 160, 165, 170, 175, 180, 185) provided that the locked telegram is intended for the segment (300, 305, 310, 315, 320, 325) assigned to the at least one unlocker (120, 130, 140).

11. Automation network according to Claim 10,
wherein the master subscriber (105) is designed to transmit telegrams to the slave subscribers (115, 125, 135, 145, 155, 160, 165, 170, 175, 180, 185),
wherein a telegram transmitted by the master subscriber (105) has a data field with a data element,
wherein the master subscriber (105) is designed to lock the telegram by virtue of the master subscriber (105) setting the data element of the telegram to a first value, and
wherein the at least one unlocker (120, 130, 140) is designed to set the first value of the data element to a second value of the data element when unlocking a locked telegram in order to indicate to the slave subscribers (115, 125, 135, 145, 155, 160, 165, 170, 175, 180, 185) that the processing of the telegram has been enabled.

12. Automation network according to one of Claims 10 to 11,
wherein the data line network (200) comprises data connections (205, 210, 215, 220, 225, 230, 235, 240, 245, 250, 255, 260) between the master subscriber (105), the slave subscribers (115, 125, 135, 145, 155, 160, 165, 170, 175, 180, 185) and the plurality of unlockers (120, 130, 140),
wherein, if an unlocker (120, 130, 140) receives an unlocked telegram, which is not intended for the segment (300, 305, 310, 315, 320, 325) assigned to the unlocker (120, 130, 140), from a preceding unlocker (120, 130, 140) via a data connection (205, 210, 215, 220, 225, 230, 235, 240, 245, 250, 255, 260), the unlocker (120, 130, 140) is designed to lock the telegram.

13. Automation network according to one of Claims 10 to 11,
wherein the data line network (200) comprises data connections (205, 210, 215, 220, 225, 230, 235, 240, 245, 250, 255, 260) between the master subscriber (105), the slave subscribers (115, 125, 135, 145, 155, 160, 165, 170, 175, 180, 185) and the plurality of unlockers (120, 130, 140), wherein the data connections (205, 210, 215, 220, 225, 230, 235, 240, 245, 250, 255, 260) each have a forward line and a return line,
wherein the slave subscribers (115, 125, 135, 145, 155, 160, 165, 170, 175, 180, 185) are designed to respectively process the telegrams on the forward line of the data connection (205, 210, 215, 220, 225, 230, 235, 240, 245, 250, 255, 260),
wherein, if an unlocker (120, 130, 140) receives an unlocked telegram via a forward line of a data connection (205, 210, 215, 220, 225, 230, 235, 240, 245, 250, 255, 260), the unlocker (120, 130, 140) is designed to transmit the unlocked telegram to the master subscriber (105) via a return line of the data connection (205, 210, 215, 220, 225, 230, 235, 240, 245, 250, 255, 260).

14. Automation network according to one of Claims 10 to 13,
wherein the at least one unlocker (120, 130, 140) is in the form of a network distributor and is designed to have a plurality of input/output ports (P0, P1, P2, P3, P4), to which segments (300, 305, 310, 315, 320, 325) containing slave subscribers (115, 125, 135, 145, 155, 160, 165, 170, 175, 180, 185) are connected,
wherein the at least one unlocker (120, 130, 140) in the form of a network distributor is designed to use the telegram identifier to route the telegram via the plurality of input/output ports (P0, P1, P2, P3, P4) of the at least one unlocker (120, 130, 140) in the form of a network distributor, and
wherein the at least one unlocker (120, 130, 140) is additionally in the form of a slave subscriber (115, 125, 135, 145, 155, 160, 165, 170, 175, 180, 185) in order to also process the telegram.

15. Unlocker for an automation network (100) according to one of Claims 10 to 14, wherein the unlocker (120, 130, 140) is designed to carry out a method for transmitting data according to one of Claims 1 to 6 and to use a telegram according to one of Claims 7 to 9 in the method.

## Revendications

1. Procédé de transmission de données dans un réseau d'automatisation à l'aide de télégrammes,
le réseau d'automatisation (100) comprenant un périphérique maître (105) et des périphériques esclaves (115, 125, 135, 145, 155, 160, 165, 170, 175, 180, 185) qui sont reliés les uns aux autres par le biais d'un réseau de lignes de données (200),
**caractérisé en ce que** le réseau d'automatisation (100) comprend au moins un dispositif de déblocage (120, 130, 140) qui est relié au périphérique maître (105) et aux périphériques esclaves (115, 125, 135, 145, 155, 160, 165, 170, 175, 180, 185) par le biais du réseau de lignes de données (200),
les périphériques esclaves (115, 125, 135, 145, 155, 160, 165, 170, 175, 180, 185) étant divisés en segments (300, 305, 310, 315, 320, 325), chaque segment (300, 305, 310, 315, 320, 325) comprenant au moins un périphérique esclave (115, 125, 135, 145, 155, 160, 165, 170, 175, 180, 185), le périphérique maître (105) envoyant des télégrammes bloqués en vue du traitement par les périphériques esclaves (115, 125, 135, 145, 155, 160, 165, 170, 175, 180, 185), lesquels télégrammes comportent chacun un identifiant destiné à associer un télégramme bloqué à un segment (300, 305, 310, 315, 320, 325), au moins un segment (300, 305, 310, 315, 320, 325) étant associé à l'au moins un dispositif de déblocage (120, 130, 140),
si l'au moins un dispositif de déblocage (120, 130, 140) reçoit un télégramme bloqué, l'au moins un dispositif de déblocage (120, 130, 140) vérifiant alors sur la base de l'identifiant de télégramme dans le télégramme bloqué si le télégramme bloqué est destiné au segment (300, 305, 310, 315, 320, 325) associé à l'au moins un dispositif de déblocage (120, 130, 140) pour libérer le télégramme bloqué en télégramme débloqué en vue du traitement par les périphériques esclaves (115, 125, 135, 145, 155, 160, 165, 170, 175, 180, 185) dans la mesure où le télégramme bloqué est destiné au segment (300, 305, 310, 315, 320, 325) associé à l'au moins un dispositif de déblocage (120, 130, 140).

2. Procédé selon la revendication 1,
les télégrammes comportant chacun une zone de données pourvue d'un élément de données,
si les télégrammes sont bloqués, l'élément de données ayant alors une première valeur,
si les télégrammes sont débloqués, l'élément de données ayant alors une deuxième valeur, et
l'au moins un dispositif de déblocage (120, 130, 140) mettant la première valeur de l'élément de données à la deuxième valeur de l'élément de données lors du déblocage d'un télégramme bloqué afin d'indiquer aux périphériques esclaves (115, 125, 135, 145, 155, 160, 165, 170, 175, 180, 185) la libération du télégramme.

3. Procédé selon la revendication 1 ou 2,
le périphérique maître (105) envoyant à destination de l'au moins un dispositif de déblocage (120, 130, 140) avant l'envoi des télégrammes un télégramme de configuration qui indique à l'au moins un dispositif de déblocage (120, 130, 140) l'identifiant de télégramme du segment (300, 305, 310, 315, 320, 325) qui est associé à l'au moins un dispositif de déblocage (120, 130, 140).

4. Procédé selon l'une des revendications 1 à 3,
le réseau de lignes de données (200) comprenant des liaisons de données (205, 210, 215, 220, 225, 230, 235, 240, 245, 250, 255, 260) entre le périphérique maître (105), les périphériques esclaves (115, 125, 135, 145, 155, 160, 165, 170, 175, 180, 185) et plusieurs dispositifs de déblocage (120, 130, 140),
si un dispositif de déblocage (120, 130, 140) reçoit d'un précédent dispositif de déblocage (120, 130, 140) par le biais d'une liaison de données (205, 210, 215, 220, 225, 230, 235, 240, 245, 250, 255, 260) un télégramme débloqué qui n'est pas destiné au segment (300, 305, 310, 315, 320, 325) associé au dispositif de déblocage (120, 130, 140), le dispositif de déblocage (120, 130, 140) bloquant alors le télégramme.

5. Procédé selon l'une des revendications 1 à 3,
le réseau de lignes de données (200) comprenant des liaisons de données (205, 210, 215, 220, 225, 230, 235, 240, 245, 250, 255, 260) entre le périphérique maître (105), les périphériques esclaves (115, 125, 135, 145, 155, 160, 165, 170, 175, 180, 185) et plusieurs dispositifs de déblocage (120, 130, 140), les liaisons de données (205, 210, 215, 220, 225, 230, 235, 240, 245, 250, 255, 260) comportant chacune une ligne aller et une ligne retour, les périphériques esclaves (115, 125, 135, 145, 155, 160, 165, 170, 175, 180, 185) traitant les télégrammes sur la ligne aller de la liaison de données (205, 210, 215, 220, 225, 230, 235, 240, 245, 250, 255, 260),
si un dispositif de déblocage (120, 130, 140) reçoit un télégramme débloqué d'un dispositif de déblocage précédent (120, 130, 140) par le biais d'une ligne aller d'une liaison de données (205, 210, 215, 220, 225, 230, 235, 240, 245, 250, 255, 260), le dispositif de déblocage (120, 130, 140) envoyant le télégramme débloqué au périphérique maître (105) par le biais d'une ligne retour de la liaison de données (205, 210, 215, 220, 225, 230, 235, 240, 245, 250, 255, 260).

6. Procédé selon l'une des revendications 1 à 5,
l'au moins un dispositif de déblocage (120, 130, 140) étant conçu comme un distributeur de réseau et comportant plusieurs ports entrée/sortie P1, P2, P3, P4) au niveau desquels des segments (300, 305, 310, 315, 320, 325) sont raccordés à des périphériques esclaves (115, 125, 135, 145, 155, 160, 165, 170, 175, 180, 185),
l'au moins un dispositif de déblocage (120, 130, 140) conçu comme un distributeur de réseau utilisant l'identifiant de télégramme pour acheminer le télégramme par le biais des plusieurs ports entrée/sortie (P0, P1, P2, P3, P4) de l'au moins un dispositif de déblocage (120, 130, 140) conçu comme un distributeur de réseau, et
l'au moins un dispositif de déblocage (120, 130, 140) étant en plus conçu comme un périphérique esclave (115, 125, 135, 145, 155, 160, 165, 170, 175, 180, 185) afin de traiter également le télégramme.

7. Télégramme utilisé dans le procédé selon l'une des revendications 2 à 6,
le télégramme comportant une portion de tête (505), une portion de données (510) et une portion de fin (515),
la portion de tête (505) comportant l'identifiant de télégramme,
la portion de données (510) comportant la zone de données pourvue de l'élément de données,
si le télégramme est bloqué, l'élément de donnée ayant alors la première valeur,
si le télégramme est débloqué, l'élément de donnée ayant alors la deuxième valeur,
et
la portion de fin (515) comprenant une zone de somme de contrôle (550) destinée à un contrôle d'intégrité des données envoyées.

8. Télégramme selon la revendication 7,
le télégramme étant conçu comme un télégramme Ethernet qui comporte une zone d'adresse de destination (555) et une zone d'adresse d'expéditeur (560) dans la portion de tête (520),
la zone d'adresse de destination (555) et la zone d'adresse d'expéditeur (560) étant chacune conçue comme une zone d'adresse MAC,
la portion de tête (520) comprenant une zone TAG (565) qui comporte l'identifiant de télégramme, et
la portion de tête (520) comportant une zone de protocole (570) destinée à un protocole utilisé.

9. Télégramme selon la revendication 7 ou 8,
le télégramme étant conçu comme un télégramme EtherCAT, la portion de données (510) comprenant une autre portion de tête (525),
l'autre portion de tête (525) comportant une zone de longueur (575), une zone de réserve (580) et la zone de données,
la zone de données étant conçue comme une zone de type (585) et l'élément de données étant conçu comme un type de protocole EtherCAT.

10. Réseau d'automatisation,
le réseau d'automatisation (100) comprenant un périphérique maître (105) et des périphériques esclaves (115, 125, 135, 145, 155, 160, 165, 170, 175, 180, 185) qui sont reliés les uns aux autres par le biais d'un réseau de lignes de données (200),
**caractérisé en ce que** le réseau d'automatisation (100) comprend au moins un dispositif de déblocage (120, 130, 140) qui est relié au périphérique maître (105) et aux périphériques esclaves (115, 125, 135, 145, 155, 160, 165, 170, 175, 180, 185) par le biais du réseau de lignes de données (200),
les périphériques esclaves (115, 125, 135, 145, 155, 160, 165, 170, 175, 180, 185) étant divisés en segments (300, 305, 310, 315, 320, 325), chaque segment (300, 305, 310, 315, 320, 325) comprenant au moins un périphérique esclave (115, 125, 135, 145, 155, 160, 165, 170, 175, 180, 185), le périphérique maître (105) étant conçu pour envoyer, en vue d'un traitement par les périphériques esclaves (115, 125, 135, 145, 155, 160, 165, 170, 175, 180, 185), des télégrammes bloqués qui comportent un identifiant de télégramme afin d'associer un télégramme bloqué à un segment (300, 305, 310, 315, 320, 325),
au moins un segment (300, 305, 310, 315, 320, 325) étant associé à l'au moins un dispositif de déblocage (120, 130, 140),
l'au moins un dispositif de déblocage (120, 130, 140) étant conçu, si l'au moins un dispositif de déblocage (120, 130, 140) reçoit un télégramme bloqué, pour vérifier sur la base de l'identifiant de télégramme dans le télégramme bloqué si le télégramme bloqué est destiné au segment (300, 305, 310, 315, 320, 325) associé à l'au moins un dispositif de déblocage (120, 130, 140) afin de libérer le télégramme bloqué en télégramme débloqué en vue du traitement par les périphériques esclaves (115, 125, 135, 145, 155, 160, 165, 170, 175, 180, 185), dans la mesure où le télégramme bloqué est destiné au segment (300, 305, 310, 315, 320, 325) associé à l'au moins un dispositif de déblocage (120, 130, 140).

11. Réseau d'automatisation selon la revendication 10, le périphérique maître (105) étant conçu pour envoyer des télégrammes aux périphériques esclaves (115, 125, 135, 145, 155, 160, 165, 170, 175, 180, 185),
un télégramme envoyé par le périphérique maître (105) étant une zone de données pourvue d'un élément de données,
le périphérique maître (105) étant conçu pour bloquer le télégramme du fait que le périphérique maître (105) met l'élément de données du télégramme à une première valeur, et
l'au moins un dispositif de déblocage (120, 130, 140) étant conçu pour mettre la première valeur de l'élément de données à une deuxième valeur de l'élément de données lors du déblocage d'un télégramme bloqué afin d'indiquer aux périphériques esclaves (115, 125, 135, 145, 155, 160, 165, 170, 175, 180, 185) une libération du traitement du télégramme.

12. Réseau d'automatisation selon l'une des revendications 10 à 11,
le réseau de lignes de données (200) comprenant des liaisons de données (205, 210, 215, 220, 225, 230, 235, 240, 245, 250, 255, 260) entre le périphérique maître (105), les périphériques esclaves (115, 125, 135, 145, 155, 160, 165, 170, 175, 180, 185) et plusieurs dispositifs de déblocage (120, 130, 140),
un dispositif de déblocage (120, 130, 140) étant conçu pour bloquer un télégramme débloqué si le dispositif de déblocage (120, 130, 140) reçoit ledit télégramme d'un dispositif de déblocage précédent (120, 130, 140) par le biais d'une liaison de données (205, 210, 215, 220, 225, 230, 235, 240, 245, 250, 255, 260) qui n'est pas destinée au segment (300, 305, 310, 315, 320, 325) associé au dispositif de déblocage (120, 130, 140).

13. Réseau d'automatisation selon l'une des revendications 10 à 11,
le réseau de lignes de données (200) comprenant des liaisons de données (205, 210, 215, 220, 225, 230, 235, 240, 245, 250, 255, 260) entre le périphérique maître (105), les périphériques esclaves (115, 125, 135, 145, 155, 160, 165, 170, 175, 180, 185) et plusieurs dispositifs de déblocage (120, 130, 140), les liaisons de données (205, 210, 215, 220, 225, 230, 235, 240, 245, 250, 255, 260) comportant chacun une ligne aller et une ligne retour,
les périphériques esclaves (115, 125, 135, 145, 155, 160, 165, 170, 175, 180, 185) étant conçus pour traiter les télégrammes sur la ligne aller de la liaison de données (205, 210, 215, 220, 225, 230, 235, 240, 245, 250, 255, 260),
un dispositif de déblocage (120, 130, 140) étant conçu pour envoyer un télégramme débloqué au périphérique maître (105) par le biais d'une ligne retour de la liaison de données (205, 210, 215, 220, 225, 230, 235, 240, 245, 250, 255, 260) si le dispositif de déblocage (120, 130, 140) reçoit ledit télégramme débloqué par le biais d'une ligne aller d'une liaison de données (205, 210, 215, 220, 225, 230, 235, 240, 245, 250, 255, 260).

14. Réseau d'automatisation selon l'une des revendications 10 à 13,
l'au moins un dispositif de déblocage (120, 130, 140) étant conçu comme un distributeur de réseau et étant conçu pour comporter plusieurs ports entrée/sortie (P0, P1, P2, P3, P4) au niveau desquels des segments (300, 305, 310, 315, 320, 325) sont raccordés à des périphériques esclaves (115, 125, 135, 145, 155, 160, 165, 170, 175, 180, 185),
l'au moins un dispositif de déblocage (120, 130, 140) conçu comme un distributeur de réseau étant conçu comme l'identifiant de télégramme pour acheminer le télégramme par le biais des plusieurs ports entrée/sortie (P0, P1, P2, P3, P4) de l'au moins un dispositif de déblocage (120, 130, 140) conçu comme un distributeur de réseau, et
l'au moins un dispositif de déblocage (120, 130, 140) étant conçu en plus comme périphérique esclave (115, 125, 135, 145, 155, 160, 165, 170, 175, 180, 185) pour traiter également le télégramme.

15. Dispositif de déblocage destiné à un réseau d'automatisation (100) selon l'une des revendications 10 à 14, le dispositif de déblocage (120, 130, 140) étant conçu pour mettre en œuvre un procédé de transmission de données selon l'une des revendications 1 à 6, et pour utiliser dans le procédé un télégramme selon l'une des revendications 7 à 9.
